# EUROPÄISCHE PATENTSCHRIFT

(11) **EP 4 450 708 B1**
(45) Veröffentlichungstag und Bekanntmachung des Hinweises auf die Patenterteilung: **14.01.2026**
(21) Anmeldenummer: 24165626.3
(22) Anmeldetag: 22.03.2024
(51) Int. Cl.: E01C 19/48, E01C 19/26, B60N 2/14, B60N 2/06, E02F 9/16, B62D 33/06, B62D 1/20

(54) **STRASSENBAUMASCHINE, INSBESONDERE STRASSENFERTIGER ODER TANDEMWALZE**
ROAD CONSTRUCTION MACHINE, IN PARTICULAR ROAD FINISHER OR TANDEM ROLLER
ENGIN DE CONSTRUCTION ROUTIÈRE, EN PARTICULIER FINISSEUR OU ROULEAU TANDEM

(30) Priorität: 20.04.2023 DE 102023203670
(43) Veröffentlichungstag der Anmeldung: 23.10.2024
(73) Patentinhaber: BOMAG GmbH, 56154 Boppard (DE)
(72) Erfinder: Anheier, Thorsten, 56154 Boppard (DE); Haubrich, Thomas, 56154 Boppard (DE); Klein, Thomas, 56154 Boppard (DE)
(74) Vertreter: Zimmermann & Partner Patentanwälte mbB

(56) Entgegenhaltungen:
- EP-A1- 4 029 727
- DE-A1- 102010 035 270
- DE-A1- 2 112 972
- FR-B1- 2 840 871
- JP-B2- 4 876 271
- US-A1- 2011 236 130

## Beschreibung

Die Erfindung betrifft eine Straßenbaumaschine, insbesondere einen Straßenfertiger oder eine Tandemwalze, zur Bearbeitung eines Bodens in einer Vorwärtsrichtung.

Gattungsgemäße Straßenbaumaschinen werden beispielsweise im Straßen- und Wegebau, beim Bau von Plätzen oder ähnlichem eingesetzt. Eine gattungsgemäße Straßenbaumaschine weist üblicherweise einen Maschinenrahmen, einen Fahrstand, wenigstens eine Fahreinrichtung und eine Bedieneinheit zur Eingabe von Lenkvorgaben auf. Insbesondere ist eine gattungsgemäße Straßenbaumaschine vorliegend ein Straßenfertiger oder eine Tandemwalze. Ein Straßenfertiger umfasst weiter üblicherweise einen in Einbaurichtung vor dem Fahrstand positionierten Materialbunker, mehrere Fördereinrichtungen zur Längs- und Querförderung von Einbaumaterial, Fahreinrichtungen, wie Räder oder Kettenlaufwerke, sowie eine Einbaubohle. Tandemwalzen weisen als Fahreinrichtungen üblicherweise sogenannte Walzbandagen und/oder Gummiräder auf. Tandemwalzen können schemel- oder knickgelenkt ausgebildet sein. Derartige Straßenbaumaschinen sind regelmäßig selbstfahrende Straßenbaumaschinen, die einen Antriebsmotor, beispielsweise einen Verbrennungsmotor oder einen Elektromotor, aufweisen, über den die für den Betrieb der Straßenbaumaschine erforderliche Antriebsenergie bereitgestellt wird. Die wesentliche Tragstruktur der Straßenbaumaschine ist üblicherweise der Maschinenrahmen und ein den Maschinenrahmen tragendes Fahrwerk mit wenigstens einer, insbesondere mehreren, der vorgenannten Fahreinrichtungen. Die Bedienung der Straßenbaumaschinen erfolgt typischerweise von einem Fahrstand der Straßenbaumaschine aus. Dazu weist der Fahrstand geeignete Bedieneinrichtungen auf. Ferner ist es bekannt, wenigstens einen Bediensitz im Fahrstand vorzusehen, von dem aus der Bediener aus einer Sitzposition heraus die Straßenbaumaschine bedienen kann. Der Fahrstand kann wenigstens ein Geländer oder eine Fahrstandtür aufweisen.

Straßenfertiger werden dazu eingesetzt, eine Materialmatte aus einem üblicherweise schüttgutartigen Einbaumaterial, beispielsweise Asphalt oder Beton, auf einen vorbereiteten Bodenuntergrund aufzutragen beziehungsweise einzubauen. Hierfür weisen sie an ihrem vorderen Ende einen Materialbunker auf, in dem Einbaumaterial vorgehalten wird. Dieses wird durch einen zentralen Schacht ans Heck der Maschine transportiert und dort von einer Querverteileinrichtung, beispielsweise einem Schneckenförderer, quer zur Vorwärtsrichtung verteilt. Schließlich wird das Einbaumaterial von einer Einbaubohle glatt abgezogen und vorverdichtet. Ein typischer Straßenfertiger ist beispielsweise in der DE102017002225A1 offenbart.

Tandemwalzen wiederum werden üblicherweise dazu eingesetzt, entweder den Bodenuntergrund, auf dem eine Deckschicht eingebaut werden soll, zu verdichten, oder um eine Schicht aus einem Einbaumaterial, insbesondere Asphalt, zu verdichten. Beispielsweise können Tandemwalzen in einem Einbauzug in Einbaurichtung auf einen Straßenfertiger folgend eingesetzt werden und die von diesem ausgelegte Materialmatte, insbesondere Asphaltmatte, verdichten. Hierfür können Tandemwalzen beispielsweise zwei Verdichtungsbandagen aufweisen, die im Wesentlichen aus metallischen Hohlzylindern bestehen können, mit denen die Tandemwalze auf dem zu verdichtenden Boden abrollt. In einer oder beiden der Verdichtungsbandagen kann darüber hinaus jeweils wenigstens ein Schwingungserreger angeordnet sein, der die Verdichtungsbandage in Schwingungen versetzt, um auf diese Weise Einfluss auf die Verdichtung zu nehmen. Eine typische Tandemwalze ist beispielsweise in der DE102018007825A1 offenbart. Eine oder beide der Bandagen können auf als Gummiradsatz ausgebildet sein, um einen Kneteffekt auf das Bodenmaterial auszuüben.

Gattungsgemäße Straßenbaumaschinen umfassen ferner ein Lenkrad zur Eingabe von Lenkeingaben durch den im Bediensitz sitzenden Bediener, um die Bewegungsrichtung der Straßenbaumaschine im Fahrbetrieb in einer Fahrrichtung steuern zu können. Ferner ist ein Tragschlitten vorhanden, auf bzw. an dem sowohl der Bediensitz als auch das Lenkrad angeordnet sind. Es ist bekannt, eine Querführung, beispielsweise mit wenigstens einer Führungsschiene, vorzusehen, entlang derer der Tragschlitten zusammen mit dem Bediensitz und dem Lenkrad verschiebbar ist, üblicherweise in eine Horizontalrichtung quer zur Vorwärtsrichtung der Straßenbaumaschine. Der Tragschlitten ist bei gattungsgemäßen Straßenbaumaschinen somit verschiebbar an der Querführung, insbesondere der wenigstens einen Führungsschiene, gelagert, so dass er zusammen mit dem Bediensitz und dem Lenkrad entlang der wenigstens einen Führungsschiene innerhalb eines Verstellbereiches, insbesondere linear, verschiebbar ist. Mit anderen Worten ist es bekannt, den Bediensitz und das Lenkrad gemeinsam in einer Richtung quer zur Vorwärtsrichtung der Straßenbaumaschine innerhalb des Fahrstandes verschiebbar auszubilden, beispielsweis von einer bezüglich der aktuellen Vorwärtsrichtung rechtsseitigen in eine linksseitige Position und umgekehrt. Auch Zwischenpositionen, wie beispielsweise eine Mittelposition, können möglich sein. Dadurch ist es für den Bediener einer solchen Maschine möglich, seine Relativposition innerhalb der Straßenbaumaschine zu ändern und beispielsweise auf spezifische Umgebungsbedingungen, insbesondere bei Arbeiten entlang einer Längskante, anzupassen. Unter einer Vorwärtsrichtung wird vorliegend insbesondere eine vorne/hinten-Richtung der Straßenbaumaschine verstanden. Unter der Vorwärtsrichtung wird diejenige Vorwärtsrichtung verstanden, die in Richtung der Vorderseite der Straßenbaumaschine verläuft. Bei einem Straßenfertiger ist dies üblicherweise diejenige Seite der Straßenbaumaschine, auf der sich der Materialbunker befindet. Bei einer Walze ist dies üblicherweise eine vom Design der jeweiligen Maschine vorgegebene Seite. Die Vorderseite kann dabei vom Bediensitz kommend gesehen hinter der Querführung liegen.

Ein derartiger, horizontal und quer zur Arbeitsrichtung bzw. Vorwärtsrichtung der Straßenbaumaschine verschiebbarer Tragschlitten mit einem Bediensitz und mit einem Lenkrad ist beispielsweise aus dem Patent DE 10 2010 035 270 B4 der Anmelderin bekannt. Dieses Patent offenbart ferner neben der einen Querführung mit wenigstens einer Führungsschiene einen Tragschlitten, der derart bewegbar an der Querführung gelagert ist, dass er zusammen mit dem Bediensitz und dem Lenkrad entlang der Querführung innerhalb eines Verstellbereiches zwischen wenigstens zwei zueinander verschiedenen Seitenendlagen verschiebbar ist. Es ist ferner eine beim Verschieben des Tragschlittens mitgeführte Lenkantriebswelleneinrichtung, konkret eine Lenkantriebswelle, vorhanden, die mit einer ortsfest an der Straßenbaumaschine angeordneten und parallel zur Führungsschiene verlaufenden Lenkabtriebswelle gekoppelt ist. Ortsfest bedeutet dabei, dass die Lenkantriebswelle in einer definierten Position relativ zum Maschinenrahmen gelagert ist, dabei allerdings um eine in Axialrichtung der Lenkabtriebswelle verlaufende Rotationsachse rotierbar ist. Die Lenkabtriebswelle wird somit bei einer reinen Verschiebung des Tragschlittens entlang der Querführung nicht in Richtung der Verstellbewegung des Tragschlittens verstellt. Die Lenkabtriebswelle kann mit einem Hydraulikventil oder ähnlichem zur Weiterleitung der über das Lenkrad vom Bediener eingegebenen Lenkbefehle an eine oder mehrere lenkbare Fahreinrichtungen der Straßenbaumaschine verbunden und ausgebildet sein. Die mechanische Schnittstelle zwischen der Lenkantriebswelleneinrichtung und der Lenkabtriebswelle wird durch ein Richtungswechselgetriebe gebildet, das die am Lenkrad aufgebrachten Lenkbewegungen von der Lenkantriebswelleneinrichtung mechanisch auf die Lenkabtriebswelle überträgt, wobei das Richtungswechselgetriebe beim Verstellen des Tragschlittens ebenso mitgeführt wird und hierzu axialverschieblich zur Lenkabtriebswelle angeordnet ist. Anders als die ortsfeste Lenkabtriebswelle ist somit das Richtungswechselgetriebe zusammen mit der Lenkantriebswelleneinrichtung entlang der Lenkabtriebswelle verstellbar, insbesondere verschiebbar. Die Lenkantriebswelleneinrichtung ist insbesondere eine mechanische, bewegungsübertragende Verbindung des Lenkrades mit dem Richtungswechselgetriebe. Das Richtungswechselgetriebe ist funktional derart ausgebildet, dass die Richtung der vom Lenkrad kommenden Drehmomentübertragungsrichtung bzw. die jeweilige Drehachse vom Getriebeeingang des Richtungswechselgetriebes zum Getriebeausgang des Richtungswechselgetriebes geändert wird, insbesondere um einen Winkel von ca. 90°. Ferner offenbart DE102010013041A1 eine höhenverstellbare Armlehne, die zwischen einer Sitzbedienposition und einer Stehbedienposition verstellbar ist. Es kann eine höhenverstellbare Lenksäule mit umfasst sein. EP4029727A1 offenbart einen Straßenfertiger mit einem ausschwenkbaren Bedienstand. FR2840871B1 befasst sich mit einem Straßenreinigungsfahrzeug mit einem verschiebbaren Lenkrad, das zwischen einer Mitten- und einer Seitenbedienposition verstellbar ist. Für eine Doppelvibrationswalze schlägt DE2112972A1 ein schwingungsisoliertes Lenkrad vor. DE202007005756U1 befasst sich mit einer Straßenfräse, bei der der Fahrstand seitenverschiebbar ausgebildet und einen drehbaren Fahrersitz umfassen kann.

Die Arbeitsvorgänge von gattungsgemäßen Straßenbaumaschinen sind vielfältig und komplex. Gleichzeitig steigen die Anforderungen an das Arbeitsergebnis ständig. Es wird daher immer wichtiger, dass die Fahrer der gattungsgemäßen Straßenbaumaschinen diese genau und präzise steuern können und dabei gleichzeitig einen möglichst umfangreichen Überblick über die Baustellensituation behalten. Es ist daher die Aufgabe der vorliegenden Erfindung, den Fahrstand eine Straßenbaumaschine, wie er aus der DE 10 2010 035 270 B4 bekannt ist, noch weiter zu verbessern.

Die Lösung der Aufgabe gelingt mit einer Straßenbaumaschine gemäß dem unabhängigen Anspruch. Bevorzugte Weiterbildungen sind in den abhängigen Ansprüchen angegeben.

Eine gattungsgemäße Straßenbaumaschine, insbesondere ein Straßenfertiger oder eine Tandemwalze, zur Bearbeitung eines Bodens in einer Vorwärtsrichtung umfasst einen Maschinenrahmen, einen Fahrstand, wenigstens eine Fahreinrichtung und eine im Fahrstand angeordnete Bedieneinrichtung. Zu weiteren möglichen Details einer solchen gattungsgemäßen Straßenbaumaschine wird ergänzend auch auf die vorhergehenden Angaben zum Stand der Technik Bezug genommen. Es ist für eine gattungsgemäße Straßenbaumaschine ferner vorgesehen, dass die Bedieneinrichtung einen Bediensitz für einen Bediener der Straßenbaumaschine und ein Lenkrad zur Eingabe von Lenkeingaben durch den, insbesondere auf dem Bediensitz sitzenden, Bediener umfasst. Ferner weist die Straßenbaumaschine einen Tragschlitten auf. Dieser ist derart an einer Querführung verstellbar gelagert, dass er zusammen mit dem Bediensitz und dem Lenkrad entlang der Querführung innerhalb eines Verstellbereiches zwischen wenigstens zwei zueinander verschiedenen Seitenendlagen verschiebbar ist. Die Seitenendlage des Tragschlittens in Bezug auf die Querführung bezeichnet somit eine maximal zu der einen und eine maximal zu der entlang der Querführung gegenüberliegenden Seite erfolgte Verschiebung des Tragschlittens an der Querführung. Es ist auch möglich, dass der Tragschlitten eine oder mehrere Zwischenposition zwischen den beiden Seitenendlagen einnehmen kann und/oder stufenlos zwischen den beiden Endlagen verstellbar ist. Die Querführung ist insbesondere derart ausgebildet, dass eine Verschiebung des Tragschlittens in einer horizontalen Ebene (bei auf einer horizontalen Ebene aufstehenden Straßenbaumaschine) entlang einer horizontal und quer zur Vorwärtsrichtung verlaufenden Verschiebeachse möglich ist, so dass der Tragschlitten und mit ihm der Bediensitz und das Lenkrad beispielsweise von einer rechtsseitigen Bedienposition in eine linksseitige Bedienposition und umgekehrt verstellbar sind. Die Querführung kann wenigstens eine Führungsschiene aufweisen, beispielsweise in Form eines Führungsrohrs, eines Führungsbalkens oder ähnlichem. Die Lagerung des Tragschlittens an der Querführung ist somit bevorzugt derart ausgebildet, dass der Tragschlitten selbst ausschließlich translatorisch entlang der Querführung verstellbar ist.

Es ist weiter vorgesehen, dass eine beim Verschieben des Tragschlittens mitgeführte Lenkantriebswelleneinrichtung vorhanden ist, die mit einer ortsfest an der Straßenbaumaschine angeordneten und parallel zur Führungsschiene verlaufenden Lenkabtriebswelle gekoppelt ist. Funktional gesehen verbindet die Lenkantriebswelleneinrichtung das Lenkrad mit der Lenkabtriebswelle zur Übertragung eines am Lenkrad manuell vom Bediener erzeugte Lenkdrehmomentes bzw. einer Lenkdrehbewegung. Die ortsfeste Lagerung der Lenkabtriebswelle bezeichnet eine Anordnung, bei der die Position der Lenkabtriebswelle in Längsrichtung bzw. in Richtung ihrer Rotationsachse durch ein oder mehrere geeignete Lager definiert und örtlich relativ zum Maschinenrahmen der Straßenbaumaschine fixiert ist, dabei gleichzeitig allerdings eine Bewegbarkeit um die entlang der Längsachse der Lenkabtriebswelle verlaufenden Rotationsachse der Lenkantriebswelle möglich ist.

Ferner ist ein Richtungswechselgetriebe vorhanden. Dieses überträgt die am Lenkrad aufgebrachten Lenkbewegungen von der Lenkantriebswelleneinrichtung mechanisch auf die Lenkabtriebswelle und stellt mit anderen Worten die mechanische Schnittstelle zwischen diesen beiden Einrichtungen dar. Dabei kann es insbesondere zu einer Änderung der Übertragungsrichtung der Lenkbewegung und/oder zu einer Änderung des Drehsinns der übertragenen Lenkbewegung kommen. Insbesondere kann das Richtungswechselgetriebe wenigstens ein Schneckengetriebe umfassen, wie beispielsweise in der DE 10 2010 035 270 B4 offenbart, auf die hiermit Bezug genommen wird. Das Richtungswechselgetriebe wird beim Verschieben des Tragschlittens entlang der Querführung ebenso mitgeführt und ist dazu axialverschieblich zur Lenkabtriebswelle angeordnet. Dazu kann es beispielsweise vorgesehen sein, dass ein von einer Schnecke eines Schneckengetriebes angetriebenes Abtriebszahnrad eine Durchgangsöffnung mit einem polygonalen Öffnungsquerschnittsprofil aufweist, durch die hindurch die Lenkabtriebswelle verläuft, die im Querschnitt eine zum Öffnungsquerschnittsprofi im Wesentlichen komplementär ausgebildete Umfangskontur aufweist, so dass das Abtriebszahnrad in Axialrichtung der Lenkabtriebswelle verschiebbar, in Drehrichtung um die in Axialrichtung verlaufende Rotationsachse jedoch ein Formschlussdrehanschlag erhalten wird. Funktional verbindet die Lenkantriebswelleneinrichtung das Lenkrad mit dem Richtungswechselgetriebe und überträgt somit über das Lenkrad vom Bediener eingegebene Lenkbewegungen an das Richtungswechselgetriebe.

Die Lenkabtriebswelle kann, insbesondere stirnseitig, mit beispielsweise einem Hydrauliklenkventil, einer Lenkmechanik, unmittelbar einem Lenkaktor, einem oder mehreren Sensoren oder ähnlichem, verbunden sein, also einer Einrichtung, die die aufgrund der Lenkbewegung durch das Lenkrad ausgelöste Stellbewegung der Lenkabtriebswelle abtriebsseitig zur Lenkabtriebswelle weiter überträgt. Zumindest bis zum Abtrieb der Lenkabtriebswelle ist es jedoch vorgesehen, dass bei der erfindungsgemäßen Straßenbaumaschine eine Lenkvorrichtung mit den vorstehend beschriebenen Elementen vorhanden ist, bei der manuell durch den Bediener über das Lenkrad eingegebene Lenkvorgaben weitergeleitet, anschließend umgelenkt und zumindest bis zum Abtrieb der Lenkabtriebswelle rein mechanisch übertragen werden.

Es ist erfindungsgemäß weiter vorgesehen, dass an dem Tragschlitten eine Bediensitztrageinrichtung angeordnet ist, die über eine Gelenkeinrichtung, insbesondere umfassend wenigstens ein Schwenkgelenk, um eine, insbesondere in Vertikalrichtung verlaufende, Schwenkachse schwenkbar mit dem Tragschlitten verbunden ist, so dass der Bediensitz und das Lenkrad gegenüber dem Tragschlitten und damit auch gegenüber der Querführung um diese Schwenkachse verschwenkbar sind. Ergänzend zu der einleitend bereits beschriebenen Verschiebbarkeit des Tragschlittens entlang der Querführung ist es mithilfe der schwenkbar am Tragschlitten über die Gelenkeinrichtung angelenkten Bediensitztrageinrichtung nun möglich, dass das Lenkrad und der Bediensitz auch relativ zur Querführung um die Schwenkachse verschwenkbar sind. Es ist bevorzugt, wenn die Straßenbaumaschine derart ausgebildet ist, dass die Schwenkachse und die Verschiebeachse des Tragschlittens und/oder die Rotationsachse der Lenkabtriebswelle windschief zueinander verlaufen, insbesondere bei einer Projektion der beiden Achsen in eine gemeinsame vertikale und quer zur Vorwärtsrichtung ausgerichtete Referenzebene diese beiden Achsen aber in einem rechten Winkel zueinander liegen. Die Verschiebeachse des Tragschlittens entlang der Querführung und die Rotationsachse der Lenkabtriebswelle verlaufen dagegen bevorzugt parallel aber nicht koaxial zueinander. Der Tragschlitten und seine Lagerung können derart ausgebildet sein, dass das Richtungswechselgetriebe nicht schwenkbar gegenüber der Querführung ist, sondern ausschließlich axial verschiebbar, wie vorstehend beschrieben. Die Vertikalrichtung bezeichnet eine senkrecht zur Horizontalebene verlaufende Richtung. Sofern im Rahmen dieser Anmeldung von einer in Vertikalrichtung verlaufenden Schwenkachse die Rede ist, bezieht sich dies insbesondere auf eine Straßenbaumaschine, die auf einer horizontalen Ebene aufsteht. Es versteht sich, dass dieser "vertikale Verlauf" der Schwenkachse Änderungen im Verlauf der Bodenoberfläche, beispielsweise bei einem abschüssigen Gelände, entsprechend folgt.

Der Tragschlitten bildet funktional somit bevorzugt einen mit der Querführung unmittelbar verbundenen Lagerteil, der für sich ausschließlich translatorisch entlang der Querführung verstellbar ist. Die Bediensitztrageinrichtung bildet dagegen einerseits eine Tragstruktur, die über die Gelenkeinrichtung mit dem Tragschlitten verbunden und somit relativ zum Tragschlitten um die Schwenkachse verschwenkbar und zusammen mit dem Tragschlitten entlang der Querführung verschiebbar ist. Andererseits bildet die Tragstruktur diejenige Gesamtheit, an der der Bediensitz und das Lenkrad gelagert sind und somit zusammen mit der Tragstruktur verstellt werden können. Der Bediensitz und das Lenkrad sind, zumindest im an der Tragstruktur arretierten Zustand, ortsfest zur Tragstruktur und werden mit dieser gemeinsam, wie vorstehend erläutert, verstellt. Die von dem im Bediensitz sitzenden Bediener resultierende Gewichtskraft wird somit zunächst von der Bediensitztrageinrichtung aufgenommen, die wiederum am Tragschlitten schwenkbar gelagert ist, der wiederum an der Querführung gelagert ist, die die Gesamtgewichtskraft dieser Elemente und des Bedieners zumindest zu wesentlichen Teilen aufnimmt. Diese Anordnung ermöglicht somit insgesamt, dass die Bedieneinrichtung durch die mögliche Verschwenkung des Bediensitzes und des Lenkrades, insbesondere relativ zum Tragschlitten, einen zusätzlichen Bewegungsfreiheitsgrad erhält, so dass der Bediener die Position des Bediensitzes nicht nur entlang der Querführung verstellen kann, sondern durch ein Verschwenken wenigstens eines Teiles der Bediensitztrageinrichtung am Tragschlitten und damit des Bediensitzes zusätzlich auch eine zur Vorwärtsrichtung schräg ausgerichtete Position einnehmen kann. Dies kann so weit gehen, dass der Bediensitz über eine seitliche Außenwand der Straßenbaumaschine ausgeschwenkt wird, wodurch der Bediener besonders gute Sichtverhältnisse entlang einer der Seitenwände der Straßenbaumaschine erhält.

Es ist erfindungsgemäß nun weiter vorgesehen, dass die Lenkantriebswelleneinrichtung eine Längenausgleichseinrichtung umfasst. Diese ist derart ausgebildet, dass sie beim Verschwenken der Bediensitztrageinrichtung relativ zum Tragschlitten und relativ zur Querführung um die, insbesondere in Vertikalrichtung verlaufende, Schwenkachse auftretende Abstandsänderungen zwischen dem Lenkrad bzw. einem Lenkradausgang/Lenkradabtrieb und dem Richtungswechselgetriebeeingang bzw. dem Richtungswechselgetriebeantrieb ausgleicht. Die Längenausgleichseinrichtung ist somit insbesondere im Bereich zwischen dem Lenkrad und dem Richtungswechselgetriebe angeordnet. Funktional gesehen wird mit der Längenausgleichseinrichtung als Teil der Lenkantriebswelleneinrichtung somit eine Variabilität insbesondere auch der Längserstreckung der funktional als Lenkantriebswelle wirkenden Gesamtheit der Lenkantriebswelleneinrichtung erhalten, so dass unter Aufrechterhaltung der bevorzugt vollmechanischen Übertragungsweise von Lenkbefehlen des Übertragungsstranges vom Lenkrad bis zumindest hin zum Abtrieb der Lenkabtriebswelle insbesondere auch Änderungen in der Relativlage des Lenkrades bzw. des Lenkradausgangs/Lenkradabtriebs zum Richtungswechselgetriebe bzw. insbesondere zum Richtungswechselgetriebeeingang/ dem Richtungswechselgetriebeantrieb, die beispielsweise aufgrund der Verschwenkung der Bediensitztrageinrichtung relativ zum Tragschlitten, auftreten können, ausgeglichen werden können. Unter Aufrechterhaltung einer unterbrechungsfrei bestehenden Möglichkeit zur Drehmomentübertragung durch die Längenausgleichseinrichtung zwischen dem Lenkrad bzw. einem Lenkradausgang/Lenkradabtrieb und dem Richtungswechselgetriebeeingang bzw. dem Richtungswechselgetriebeantrieb können auf diese Weise verschiedene räumliche Relativlagen des Lenkrades bzw. des Lenkradausgangs/Lenkradabtriebs relativ zum Richtungswechselgetriebeeingang bzw. dem Richtungswechselgetriebeantrieb, wie sie beispielsweise beim Verschwenken der Bediensitztrageinrichtung relativ zum Tragschlitten und damit des Lenkrades um die, insbesondere vertikale, Schwenkachse auftreten können und zueinander eingenommen werden, ausgeglichen werden, wobei sich die Übertragungsmechanik mithilfe der Längenausgleichseinrichtung selbsttätig an die sich dabei ändernde Relativlagen der beteiligten mechanischen Übertragungselemente anpasst. Von der Größenordnung her kann es beispielsweise vorzugsweise vorgesehen sein, dass die Längenausgleicheinrichtung derart ausgebildet ist, dass sie einen in Richtung der zumindest lokalen Längsachse verlaufenden axialen Längenausgleich im Bereich von wenigstens 0,5cm, besonders bevorzugt von wenigstens 1 cm ermöglicht.

Die Verstellungen entlang der Verschiebeachse und um die Schwenkachse dienen insbesondere dazu, die Blickperspektive des auf dem Bediensitz sitzenden Bedieners an individuelle Arbeitssituationen bzw. Arbeitsumfelde anzupassen und beispielsweise auf sich ändernde Bedingungen für ein und denselben Fahrer anpassen zu können. Dies umfasst insbesondere vorzugsweise auch die Möglichkeit, dass ein im Bediensitz sitzender Bediener aus der jeweiligen Bedienposition heraus wahlweise an der rechten oder der linken Seite der Straßenbaumaschine entlang blicken kann. Das Ausmaß der Verstellung des Tragschlittens entlang der Verschiebeachse beträgt daher auch vorzugsweise wenigstens mehr als 50 cm, insbesondere mehr als 150 cm, quer zur Vorwärtsrichtung der Straßenbaumaschine und ist nicht mit einer konventionellen Sitzverstellung in geringem Umfang in oder entgegen der Vorwärtsrichtung der Straßenbaumaschine zur bloßen Anpassung an individuelle Körpergrößen verschiedener Bediener zu verwechseln.

Wenn vorliegend von einer "Vorwärtsrichtung" die Rede ist, bezeichnet dies die Fortbewegungsrichtung der Straßenbaumaschine insbesondere im Arbeitsbetrieb. Es versteht sich, dass speziell für Straßenbaumaschinen wie Straßenwalzen, die häufig im bezüglich der aktuellen Arbeitsrichtung reversierenden Betrieb die Oberfläche des zu verdichtenden Bodenuntergrundes überfahren, die Vorwärtsrichtung zwischen einer Vorwärts- und einer Rückwärtsrichtung wechseln kann. Bevorzugt bezeichnet die Vorwärtsrichtung aber auch bei solchen Straßenbaumaschinen nur eine der beiden möglichen Arbeitsrichtungen.

Eine Bearbeitung des Bodens bezeichnet die für die jeweilige Straßenbaumaschine bestimmungsgemäße Arbeitsfunktion und Arbeitswirkung auf den Bodenuntergrund. Bei einer Straßenbaumaschine vom Typ eines Straßenfertigers kann dies insbesondere das Auftragen einer Materialmatte auf eine bestehende Bodenoberfläche und, je nach Ausführung der jeweils verwendeten Fertigerbohle, auch das wenigstens teilweise Verdichten und Glätten der ausgebrachten Materialmatte sein. Für eine Straßenbaumaschine vom Typ Straßenwalze besteht die bestimmungsgemäße Bearbeitung des Bodens in einer Verdichtungswirkung auf den Bodenuntergrund, die die Straßenwalze beim Überfahren des Bodenuntergrundes auf diesen ausübt, sei es statisch über ihr Eigengewicht oder dynamisch mit beispielsweise einem oder mehreren aus dem Stand der Technik bekannten Schwingungserregungsvorrichtungen.

Die Straßenbaumaschine gemäß der Erfindung ist vorzugsweise selbstfahrend und bewegt sich in Vorwärtsrichtung somit bevorzugt aus eigenem Antrieb. Für die Erzeugung der für den Arbeits- und Fahrbetrieb erforderlichen Antriebsenergie kann die Straßenbaumaschine eine geeignete Antriebseinrichtung aufweisen, beispielsweise einen Verbrennungs- und/oder Elektromotor.

Bevorzugt ist die Lagereinrichtung zwischen der Querführung und dem Bediensitz und dem Lenkrad somit wenigstens und insbesondere ausschließlich zweigliedrig ausgebildet, umfassend die als Tragteil ausgebildete Bediensitztrageinrichtung, an der der Bediensitz und/oder das Lenkrad angeordnet sind, sowie den als Lagerteil ausgebildeten Tragschlitten, der mit dem Tragteil über die Gelenkeinrichtung schwenkbar verbunden und an der Querführung gelagert ist.

Die konkrete Ausgestaltung der Gelenkeinrichtung kann variieren. So ist es beispielsweise möglich, dass diese mehr als ein Einzelgelenk, insbesondere genau zwei Einzelgelenke, umfasst, die entlang der Schwenkachse zueinander beabstandet positioniert sind, deren Einzelgelenkachse allerdings koaxial zur Schwenkachse verlaufen. Auch wenn hier konstruktiv ein großer Variationsfreiraum besteht, ist es bevorzugt, wenn in Vertikalrichtung gesehen wenigstens eines dieser Einzelgelenke oberhalb der Querführung und/oder wenigstens eines dieser Einzelgelenke unterhalb der Lenkabtriebswelle liegt.

Es ist möglich und bevorzugt, wenn die Bediensitztrageinrichtung derart ausgebildet ist, dass sie eine gleichzeitige Verschwenkung des Lenkrades und des Bediensitzes um dieselbe Schwenkachse ermöglicht. Alternativ kann es auch vorgesehen sein, dass die Bediensitztrageinrichtung einen den Bediensitz tragenden und einen das Lenkrad tragenden Lagerteil umfasst, die unabhängig voneinander gegenüber dem Tragschlitten verschwenkbar sind, wobei es vorteilhaft ist, wenn in diesem Fall der Bediensitz und das Lenkrad um zueinander koaxiale Schwenkachsen verschwenkbar sind. Grundsätzlich vorteilhaft ist es jedoch, wenn die Relativlage des Lenkrades zum Bediensitz in verschiedenen Verschiebepositionen des Tragschlittens, insbesondere grundsätzlich bei einer Verschiebung des Tragschlittens, und in verschiedenen Schwenklagen der Bediensitztrageinrichtung relativ zum Tragschlitten, insbesondere grundsätzlich in verschiedenen Schwenkalgen, unverändert bleibt.

Die Längenausgleichseinrichtung kann zum Erhalt des erstrebten Längenausgleiches auf verschiedene Weise ausgebildet sein. Optimal ist es, wenn der Längenausgleich quer zur Rotationsrichtung der Lenkantriebswelleneinrichtung erfolgt, insbesondere quer zur Rotationsrichtung der Lenkantriebswelleneinrichtung in demjenigen Bereich, in dem die Längenausgleichseinrichtung angeordnet ist, und quer zu derjenigen Rotationsachse der Lenkantriebswelleneinrichtung, die die diese im Bereich des Längenausgleichseinrichtung aufweist. Gleichzeitig ist es bevorzugt, wenn der Längenausgleich unter Aufrechterhaltung der Drehmomentübertragungsfunktion der Lenkantriebswelleneinrichtung vom Lenkrad zum Richtungswechselgetriebe in den verschiedenen Längenausgleichspositionen möglich und gewährleistet ist. Dazu ist es bevorzugt, dass die Längenausgleichseinrichtung in Radialrichtung zur Längsachse eines Längenausgleichbereiches der Längenausgleichsrichtung drehfest ist. Dazu kann die Längenausgleichseinrichtung zwei in Längenausgleichseinrichtung zueinander verstellbare Elemente aufweisen, die gleichzeitig in Drehrichtung um die Verstellachse der Längenausgleichseinrichtung drehfest zueinander ausgebildet sind. Hierzu kann es beispielsweise vorgesehen sein, dass die Lenkantriebswelleneinrichtung einen, insbesondere in sich drehfesten, Teleskopwellenabschnitt bzw. eine innerhalb eines Ausgleichsbereiches verstellbare Teleskopeinrichtung aufweisen. Diese kann eine Wellenhülse und eine in die Wellenhülse, insbesondere um die Längsachse der Wellenhülse drehgesichert zu dieser ausgebildete, eingreifende bzw. hineinragende Wellenstange umfassen. Die Wellenhülse und die Wellenstange können zueinander in Rotationsrichtung der Längenausgleichseinrichtung, beispielsweise durch einen oder mehrere in Umdrehungsrichtung in einem Überlappungsbereich wirkende mechanische Anschläge, drehfest zueinander ausgebildet sein. Dazu kann es beispielsweise vorgesehen sein, dass die Wellenhülse und die Wellenstange mit einem unrunden Querschnittsprofil quer zur Rotationsachse, beispielsweise polygonal, und zumindest im Überlappungsbereich komplementär zueinander ausgebildet sind. Die relativ zueinander in Längenausgleichsrichtung entlang einer Längsachse verstellbaren Elemente, beispielsweise die Wellenhülse und die in die Wellenhülse eingreifende Wellenstange, sind somit bevorzugt innerhalb des Längenausgleichsbereiches zueinander entlang der Längsachse axial verschiebbar, in Rotationsrichtung um die Längsachse jedoch bevorzugt drehfest bzw. drehgesichert zueinander, so dass Drehbewegungen um die Längsachse unabhängig von der aktuellen Verschiebeposition zwischen der Wellenhülse und der Wellenstange übertragen werden.

Eine bevorzugte Weiterbildung der Erfindung sieht vor, dass die Lenkantriebswelleneinrichtung eine flexible bzw. biegsame Welle bzw. zumindest einen Abschnitt mit einer biegsamen Welle umfasst. Eine flexible Welle zeichnet sich dadurch aus, dass sie signifikante Biegebewegungen, zumindest innerhalb eines Biegebereiches, zulässt, die reversibel sind und die gleichzeitig weiterhin eine Drehmomentübertragung durch die Welle zulassen. Mithilfe einer solchen flexiblen Welle kann somit auch dann eine mechanische Verbindung und Bewegungsübertragung zwischen dem Lenkrad und dem Richtungswechselgetriebe hergestellt und aufrechterhalten werden, wenn die Lenkradabtriebsachse und die Richtungswechselgetriebeantriebsachse nicht und/oder nicht mehr koaxial zueinander ausgerichtet sind. Dies kann beispielsweise dann auftreten, wenn die Bediensitztrageinrichtung um die Schwenkachse gegenüber der Querführung verschwenkt wird. Die Längsachse einer flexiblen und teilweise verbogenen Welle bestimmt sich dann lokal durch ihre an dem jeweiligen Mittelpunkt vorliegende Orientierung der Drehachse. Es ist ferner bevorzugt, wenn die Längenausgleichseinrichtung durch einen Teil bzw. Bereich der Lenkantriebswelleneinrichtung gebildet wird, der keine flexible Welle aufweist. Mit anderen Worten liegt die unter Umständen vorhandene flexible Welle vorzugsweise außerhalb der Längenausgleichseinrichtung.

Insbesondere zum Ausgleich einer nichtkoaxialen Ausrichtung der Lenkradabtriebsachse zur Richtungswechselgetriebeantriebsachse, ist es erfindungsgemäß vorgesehen, dass die Lenkantriebswelleneinrichtung ein erstes Kardangelenk, beispielsweise ein Richtungswechselgetriebekardangelenk, und ein zweites Kardangelenk, beispielsweise ein Lenkradkardangelenk, umfasst, die in Reihe zueinander, d.h. entlang der Längsachse bzw. Längserstreckung der Lenkantriebswelleneinrichtung hintereinander bzw. aufeinander folgenden, angeordnet sind. Mithilfe der beiden Kardangelenke ist es möglich, eine Kardanwelle als Teil der Lenkantriebswelleneinrichtung vorzusehen, um darüber insbesondere sich im Betrieb ändernde Relativausrichtungen der Lenkradabtriebsachse zur Richtungswechselgetriebeantriebsachse auszugleichen und gleichzeitig eine Drehmomentübertragung über die Lenkantriebswelleneinrichtung zu gewährleisten.

Für eine Weiterbildung der Erfindung mit einer Lenkantriebswelleneinrichtung mit einem ersten Kardangelenk, beispielsweise einem Richtungswechselgetriebekardangelenk, und mit einem zweiten Kardangelenk, beispielsweise einem Lenkradkardangelenk, ist es vorteilhaft, wenn die Längenausgleichseinrichtung, insbesondere in Richtung der Längserstreckung der Lenkantriebswelleneinrichtung bzw. in Richtung senkrecht zur Drehrichtung der Lenkantriebswelleneinrichtung, zwischen dem ersten und dem zweiten Kardangelenk angeordnet ist. Auf diese Weise gelingt ein Längenausgleich zwischen den beiden Gelenkeinheiten der Lenkantriebswelleneinrichtung, was beispielsweise unter räumlichen Gesichtspunkten vorteilhaft sein kann.

Bei einer Projektion der Lenkantriebswelleneinrichtung in eine virtuelle horizontale Referenzebene liegt das erste Kardangelenk in Vorwärtsrichtung der Straßenbaumaschine gesehen erfindungsgemäß vor der in Vertikalrichtung verlaufenden Schwenkachse und das zweite Kardangelenk in diese Vorwärtsrichtung der Straßenbaumaschine gesehen hinter dieser Schwenkachse. Diese räumliche Relativlage eignet sich besonders zum Erhalt vergleichsweise kompakter Ausführungsformen der Lenkantriebswelleneinrichtung.

Es ist möglich, die Lenkantriebswelleneinrichtung derart auszubilden, dass bei einer Projektion der Lenkantriebswelleneinrichtung in eine virtuelle horizontale Referenzebene wenigstens eines der beiden Kardangelenke auf der Schwenkachse liegt. Alternativ kann es vorgesehen sein, dass in dieser Projektion die beiden Kardangelenke überlappungsfrei zur Schwenkachse positioniert sind.

Ergänzend oder alternativ kann es vorgesehen sein, dass bei einer Projektion der Lenkantriebswelleneinrichtung in eine virtuelle horizontale Referenzebene die Lenkabtriebswelle und/oder die Führungsschiene der Querführung und/oder das Richtungswechselgetriebe in einer Vorwärtsrichtung der Straßenbaumaschine gesehen vor dem ersten und dem zweiten Kardangelenk positioniert sind. Auch dies kann vergleichsweise kompakte Ausführungsformen der Lenkantriebswelleneinrichtung ermöglichen.

Es ist bevorzugt, wenn das erste Kardangelenk, insbesondere Richtungswechselgetriebekardangelenk, derart ausgebildet und am Richtungswechselgetriebe gelagert ist, dass es bzw. zumindest der von dem ersten Kardangelenk gebildete Gelenkpunkt, in dem sich die beiden Längsachsen der durch das Kardangelenk miteinander gelenkig verbundenen Lenkachsenelemente schneiden, ortsfest gegenüber dem Richtungswechselgetriebe, insbesondere gegenüber einem Gehäuse des Richtungswechselgetriebes, ist. Bei einer Verschwenkung des Lenkrades bzw. der Bediensitztrageinrichtung änderte das erste Kardangelenk bzw. dessen Gelenkpunkt somit nicht seine Relativlage zum Richtungswechselgetriebe bzw. zu dessen Richtungswechselgetriebegehäuse. Ferner ist es bevorzugt, wenn das zweite Kardangelenk, insbesondere Lenkradkardangelenk, derart ausgebildet und gelagert ist, dass es bzw. zumindest der von ihm gebildete Gelenkpunkt, in dem sich die beiden Längsachsen der durch das Kardangelenk miteinander gelenkig verbundenen Lenkachsenelemente schneiden, innerhalb einer in einem Winkel und insbesondere senkrecht zur Schwenkachse verlaufenden Ebene bewegbar ist bzw. bewegt wird, wenn das Lenkrad um die Schwenkachse der Bediensitztrageinrichtung verschwenkt wird.

Für eine weiter bevorzugte Ausführungsform der Erfindung kann es vorgesehen sein, dass das Richtungswechselgetriebe eine um eine Eingangswellensachse rotierbare Eingangswelle mit einer Richtungswechselgetriebeantriebsachse umfasst, dessen Antriebsende, insbesondere direkt, mit dem ersten Kardangelenk verbunden ist. So kann es insbesondere auch vorgesehen sein, dass das Richtungswechselgetriebe als Funktions- und Baumodul bereits wenigstens einen Teil des ersten Kardangelenks mit umfasst. Weiter ist es bevorzugt, wenn das erste und das zweite Kardangelenk mit einer um eine Verbindungswellenachse rotierbaren Verbindungswelle miteinander mechanischen verbunden sind. Insbesondere die Verbindungswelle kann die Längenausgleichseinrichtung entlang der Wellenlängsachse umfassen. Weiter ergänzend kann es vorteilhaft sein, wenn das Lenkrad mit dem zweiten Kardangelenk über eine um eine Lenkwellenachse bzw. Lenkradabtriebsachse rotierbare Lenkwelle miteinander verbunden ist. Auch für das Lenkrad bzw. ein das Lenkrad umfassendes Lenkradmodul kann es vorgesehen sein, dass es als Funktions- und Baumodul bereits wenigstens einen Teil des zweiten Kardangelenks mit umfasst. Die Lenkwelle kann zusammen mit dem Lenkrad selbst ein zusammenhängendes, in sich starres Modul bilden.

Die Drehachsen der einzelnen Elemente der Lenkantriebswelleneinrichtung können bei einer Projektion der Lenkantriebswelleneinrichtung in eine virtuelle vertikale und sich in Längserstreckungsrichtung der Querführung erstreckende Referenzebene auf dem Verlauf der Schwenkachse liegen und/oder diese schneiden. Es sind allerdings auch Ausführungsformen von der Erfindung mit umfasst, bei denen diese Drehachsen in dieser Projektion neben der Schwenkachse verlaufen.

Um den Bedienkomfort für den Bediener der Straßenbaumaschine weiter zu erhöhen, ist es vorteilhaft, wenn die Bediensitztrageinrichtung eine Verstelleinrichtung umfasst, die derart ausgebildet ist, dass der Winkel einer Lenkradebene gegenüber der Schwenkachse bzw. die Neigung des Lenkrades um eine Neigungsachse verstellbar ist. Die Verstelleinrichtung kann ergänzend eine geeignete Arretiereinrichtung aufweisen, um das Lenkrad in einer vom Bediener gewünschten, eingestellten Neigung, insbesondere relativ zur Bediensitztrageinrichtung, festzustellen. Diese Arretiereinrichtung fixiert das Lenkrad allerdings nicht gleichzeitig um die eingangs genannte, insbesondere in Vertikalrichtung verlaufende, Schwenkachse, sondern lediglich an der Bediensitztrageinrichtung um eine, insbesondere horizontal verlaufende, Neigungsachse in verschiedenen, insbesondere vom Bediener manuell wählbaren, Positionen. Der Verstellbereich dieser Verstelleinrichtung in einer virtuellen Projektionsebene, die quer zur Längserstreckung der Querführung und in Vertikalrichtung verläuft, beträgt vorzugsweise wenigstens 15°, vorzugsweise wenigstens 25°.

Es ist dabei besonders bevorzugt, wenn diese Verstelleinrichtung und die Lenkantriebswelleneinrichtung derart ausgebildet sind, dass die Lenkwelle auch in einer Position arretierbar ist, in der sie bezüglich ihrer Rotationsachse koaxial zur Rotationsachse der Eingangswelle positioniert ist. Auch dies kann eine insgesamt vergleichsweise kompakte Ausbildung der Lenkantriebswelleneinrichtung ermöglichen.

Die Verstelleinrichtung kann insbesondere derart ausgebildet sein, dass die, vorzugsweise horizontal verlaufende, Neigungsachse, um die das Lenkrad unabhängig zur Schwenkachse verstellbar ist, durch eines der Kardangelenke verläuft. Auf diese Weise kann erreicht werden, dass für eine Neigungsverstellung des Lenkrades gerade kein Längenausgleich innerhalb der Lenkantriebswelleneinrichtung erforderlich ist.

Ideal ist es, wenn der Schwenkwinkel der Bediensitztrageinrichtung mit dem Bediensitz und dem Lenkrad um die, insbesondere in Vertikalrichtung verlaufende, Schwenkachse relativ zum Tragschlitten zwischen zwei maximalen Endlagen wenigstens 90°, insbesondere wenigstens 120°, und/oder maximal 180°, insbesondere maximal 160°, beträgt. Dies ermöglicht es beispielsweise, dass ein im Fahrstand befindlicher und auf dem Bediensitz sitzender Bediener aus dem Fahrstand wenigstens teilweise herausschwenken und praktisch außerhalb der übrigen Maschine sitzen und vergleichsweise komfortabel entlang einer Seitenaußenwand der Straßenbaumaschine blicken kann. Dies kann ein vergleichsweise präzises Manövrieren der Straßenbaumaschine entlang von in Vorwärtsrichtung verlaufenden Hindernissen, wie beispielsweise einem Randstein, ermöglichen.

Es kann vorgesehen sein, dass die Bedieneinrichtung eine oder mehrere Arretiereinrichtungen umfasst, insbesondere jeweils manuell lösbare und feststellbare Arretiereinrichtungen. Eine dieser Arretiereinrichtungen kann derart ausgebildet sein, dass sie den Tragschlitten bezüglich seiner Bewegbarkeit entlang der Querführung arretiert und freigibt. Ergänzend oder alternativ kann eine Arretiereinrichtung vorgesehen sein, die derart ausgebildet ist, dass sie die Bediensitztrageinrichtung bezüglich ihrer Verschwenkung um die Schwenkachse gegenüber dem Tragschlitten und damit auch gegenüber der Querführung arretiert und freigibt. Diese Arretiereinrichtungen sind bevorzugt manuell betätigbar.

Eine oder mehrere der vorstehend genannten Arretiereinrichtungen können derart ausgebildet sein, dass sie innerhalb eines Verstellbereiches eine inkrementelle oder eine stufenlose Verstellbarkeit zwischen den beiden maximalen, den jeweiligen Verstellbereich begrenzenden Endlagen zulassen. Es können ergänzend oder alternativ ein oder mehrere Sensoren zur Positionsermittlung bzw. zur Ermittlung der Einnahme einer oder mehrerer bestimmter Positionen, beispielsweise eine definierten, insbesondere maximalen, Endlage oder ähnlichem vorgesehen sein. Weiter ergänzend oder alternativ können auch ein oder mehrere Antriebseinrichtungen, wie beispielsweise ein Antriebsmotor, insbesondere Elektro- oder Hydraulikmotor, und/oder ein Aktor, umfasst sein, die zum motorischen Antrieb der jeweiligen Stellbewegung innerhalb der jeweiligen Stellbereiches ausgebildet und angeordnet sind.

Es kann ergänzend eine Teleskopiereinrichtung von der Lenkantriebswelleneinrichtung umfasst sein, die derart ausgebildet ist, dass das Lenkrad 11 entlang der Achse A1 verstellbar, mit anderen Worten praktisch höhenverstellbar, ist. Diese Höhenverstellung ist allerdings unabhängig von der Schwenk- und Verschiebeposition der Bedieneinrichtung und insbesondere auch unabhängig von der aktuellen Relativlage des Tragschlittens relativ zur Bediensitztrageinrichtung. Besonders bevorzugt ist, wenn die Teleskopiereinrichtung im Bereich zwischen dem Lenkrad und dem zweiten Kardangelenk, also im Bereich der Lenkantriebswelleneinrichtung, der sich um die Lenkwellenachse dreht, gebildet wird. Die Lenkwellenantriebseinrichtung umfasst bei dieser Weiterbildung somit zwei in Reihe zueinander angeordnete Einrichtungen, die eine Verstellung in Längsrichtung der Lenkantriebswelleneinrichtung ermöglichen. Diese sind allerdings funktional unabhängig voneinander. Eine Höhenverstellung des Lenkrades mithilfe der Teleskopiereinrichtung ändert nichts an der Relativlage des Tragschlittens relativ zur Bediensitztrageinrichtung oder am Zustand der Längenausgleichseinrichtung. Andersherum wirkt sich eine Änderung der Relativlage des Tragschlittens relativ zur Bediensitztrageinrichtung zwar auf die Längenausgleichseinrichtung bzw. deren Zustand aus, nicht aber auf die Teleskopiereinrichtung und/oder die aktuelle Höhenposition des Lenkrades.

Neben der vorstehend beschriebenen erhöhten Variabilität der Relativlage des Bediensitzes relativ zur Querführung ermöglicht es die Erfindung in konstruktiver Hinsicht, dass die Lage der Schwenkachse relativ zur Lage der Verschiebeachse der Querführung nahezu frei wählbar und damit individuell an verschiedenste Gegebenheiten der jeweiligen Straßenbaumaschine anpassbar ist. Diese beiden Achsen können windschief zueinander verlaufen. Es ist aber auch möglich, dass sie einander schneiden und/oder vollständig in einer gemeinsamen Ebene verlaufen.

Die Erfindung wird nachstehend anhand der in den Figuren gezeigten Ausführungsbeispiele näher erläutert. Es zeigen schematisch:
- Fig. 1: eine Seitenansicht Straßenbaumaschine vom Typ Straßenfertiger;
- Fig. 2: eine Seitenansicht einer Straßenbaumaschine vom Typ Straßenwalze;
- Fig. 3: eine perspektivische Seitenansicht einer Bedieneinheit einer Straßenbaumaschine von schräg hinten oben;
- Fig. 4: eine Draufsicht auf die Bedieneinheit aus der Fig. 3 mit verschiedenen Verschwenk- und Verschiebepositionen;
- Fig. 5: eine Schnittansicht entlang der Linien I-I aus der Fig. 4; und
- Fig. 6: eine Schnittansicht entlang der Linie II-II aus der Fig. 4.

Gleiche beziehungsweise gleich wirkende Bauteile sind in den Figuren mit den gleichen Bezugszeichen beziffert. Sich wiederholende Bauteile sind nicht in jeder Figur gesondert bezeichnet.

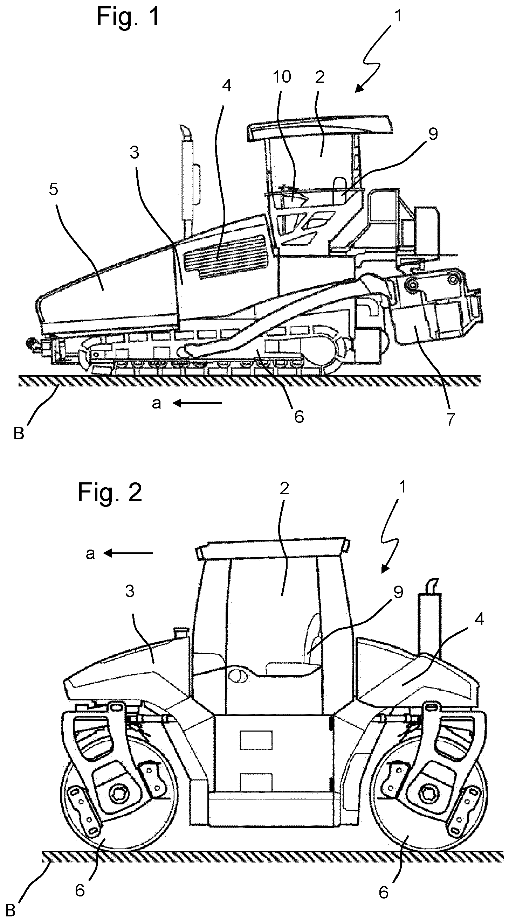

Die Figuren 1 und 2 zeigen Straßenbaumaschinen 1, konkret einen Straßenfertiger (Fig. 1) und eine Straßenwalze vom Typ Tandemwalze (Fig. 2). Die Straßenbaumaschinen 1 weisen bevorzugt einen Maschinenrahmen 3, einen Fahrstand 2 und ein Fahrwerk auf. Von dem Fahrstand 2 aus erfolgt eine Bedienung der Straßenbaumaschine 1. Das Fahrwerk umfasst bevorzugt Fahreinrichtungen 6, die im Falle des Straßenfertigers aus Fig. 1 beispielsweise Kettenlaufwerke oder Räder sein können. Im Falle der Straßenwalze aus Fig. 2 können die Fahreinrichtungen 6 beispielsweise als Verdichtungsbandagen oder auch als Gummiradsatz ausgebildet sein. Darüber hinaus umfassen die Straßenbaumaschinen 1 bevorzugt einen Antriebsmotor 4 als Primärantriebsaggregat, der beispielsweise ein Verbrennungsmotor, insbesondere Dieselmotor, und/oder ein Elektromotor sein kann, und der Antriebsenergie zum Betrieb der Straßenbaumaschine 1 zur Verfügung stellt. Im Arbeitsbetrieb der Straßenbaumaschinen 1 bewegen sich diese in oder entgegen der Vorwärtsrichtung a über den Bodenuntergrund B und bearbeiten diesen, beispielsweise durch das Verlegen einer Materialmatte, insbesondere einer Asphaltmatte, durch den Straßenfertiger oder durch eine Verdichtung des Bodens durch die Tandemwalze.

Der Straßenfertiger gemäß Fig. 1 weist bevorzugt einen Materialbunker 5 auf, in dem Einbaugut während des Arbeitsbetriebes vorgehalten wird. Dieses wird dann durch den Straßenfertiger an dessen Heck transportiert, wo es bevorzugt von einer Querverteileinrichtung wie einem Schneckenförderer verteilt und von einer Einbaubohle 7 geglättet und vorverdichtet wird.

Die Straßenwalze gemäß Fig. 2 können den Boden durch ihr Eigengewicht statisch und optional dynamisch mithilfe einer oder mehrerer in einer oder in mehreren der Verdichtungsbandagen 6 angeordneten Schwingungserregungseinrichtungen verdichten.

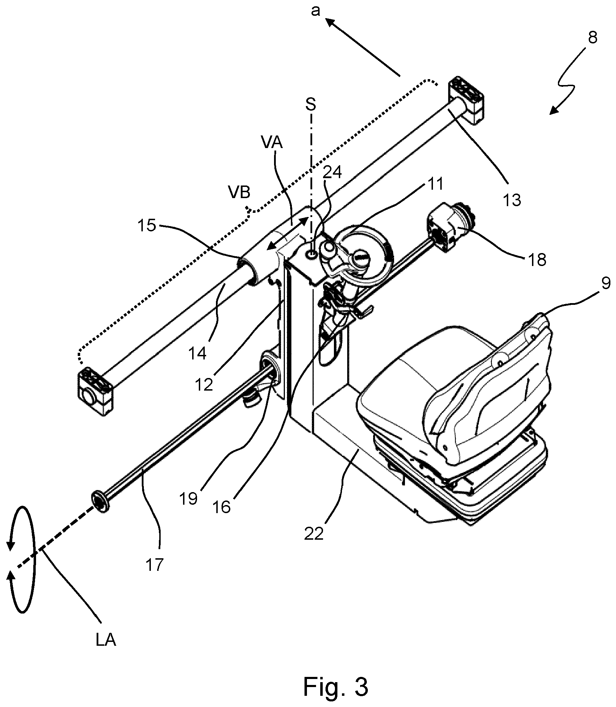

Die Straßenbaumaschinen 1 weisen in ihrem Fahrstand 2 wenigstens eine Bedieneinrichtung 8 auf, wie sie beispielhaft in den Figuren 3 bis 6 näher beschrieben ist. Teil der Bedieneinrichtung 8 ist unter anderem ein Bediensitz 9, von dem aus ein darin sitzender Bediener unter anderem ein Lenkrad zur manuell betätigten Vorgabe von Lenkbefehlen bedienen kann. Die Bedieneinrichtung 8 kann eine Bedienkonsole 10 aufweisen, wie sie in der Fig. 1 teilweise dargestellt ist. Weitere Einzelheiten zu einem beispielhaften Aufbau der Bedieneinrichtung 8 sind in den Figuren 3 bis 6 angegeben.

Neben dem Bediensitz 9 umfasst die Bedieneinrichtung 8 das in Blickrichtung eines im Bediensitz 9 sitzenden Bedieners vor dem Bediensitz angeordnete Lenkrad 11, einen Tragschlitten 12 sowie eine Querführung 13, vorliegend beispielsweise mit wenigstens einer Führungsschiene 14, die zumindest weit überwiegend die auf den Tragschlitten 12 und die auf an diesem angeordneten Elemente und den im Bediensitz sitzenden Fahrer zurückgehenden Traglasten aufnimmt. Das Lenkrad 11 kann mittig zum Bediensitz 9 angeordnet sein, d.h. bei einer Proj ektion der Bediensitzes 9 und des Lenkrades 11 in eine gemeinsame vertikale Projektionsebene, die senkrecht zur Blickrichtung eines im Bediensitz sitzenden und von diesem ausgehend geradeaus in Richtung zum Lenkrad blickenden Bedieners verläuft, in der Mitte der Breite der Sitzfläche positioniert sein. Der Tragschlitten 12 ist innerhalb eines Verstellbereiches VB in Richtung einer Verschiebeachse VA an der Querführung 13 bewegbar, insbesondere linear verschiebbar, gelagert und kann dazu beispielsweise eine Lagerhülse 15 aufweisen, die, möglicherweise ein Rollenlager oder ähnliches umfassend, auf der im vorliegenden Ausführungsbeispiel exemplarisch als Rundrohr ausgebildeten Führungsschiene 14 der Querführung 13 verschiebbar ist. Die Querführung 13 kann auch zur Führungsschiene 14 alternative und/oder ergänzende Trag- und Führungseinrichtungen umfassen, beispielsweise mit einem polygonalen Querschnitt und/oder umfassend mehrere parallel zueinander verlaufende Führungsschienen etc. Der Tragschlitten 12 stellt funktional eine, ein- oder mehrteilige, Trageinrichtung dar, an der über eine Gelenkeinrichtung 24 eine Bediensitztrageinrichtung 22 um eine Schwenkachse S schwenkbar gelagert ist, die wiederum die Tragstruktur für das Lenkrad 11 und den Bediensitz 9 bildet. Der Tragschlitten 12 bildet somit die mechanische Verbindung zur Querführung 14. Die einander gegenüberliegenden maximalen Verschiebepositionen des Tragschlittens 12, insbesondere seiner Lagerhülse 15, definieren zwei Seitenendlagen, beispielsweise eine bezüglich der Vorwärtsrichtung a rechte und linke Seitenendlage, die jeweils eine in die jeweilige Richtung maximale Verschiebeposition, beispielsweise aufgrund eines mechanischen Anschlags, definieren. Innerhalb des Verstellbereiches VB kann eine stufenlose oder inkrementelle Verstellung vorgesehen sein. Die Querführung 14 kann diejenige Einrichtung sein, die im Gegensatz zu einer nachstehend noch näher beschriebenen Lenkabtriebswelle 17, die von dem Tragschlitten 12 und den von dem Tragschlitten 12 getragenen Elementen, wie beispielsweise dem Bediensitz 9, dem Lenkrad 11, dem im Bediensitz 9 sitzenden Bediener etc., resultierende Gewichtskraft zumindest zu wesentlichen Teilen aufnimmt und stützt.

Teil der Bedieneinrichtung 8 ist ferner eine Lenkantriebswelleneinrichtung 16 sowie die Lenkabtriebswelle 17. Die Lenkabtriebswelle 17 kann im Wesentlichen parallel zur Querführung 13 bzw. zur Verschiebeachse VA verlaufen. Wesentlich ist, dass die Lenkabtriebswelle 17 um eine Lenkabtriebswellenachse LA rotierbar ist, ansonsten aber ortsfest in der Straßenbaumaschine 1, insbesondere relativ zum Maschinenrahmen 3, angeordnet ist. Bei einer Verschiebung des Tragschlittens 12 entlang der Verschiebeachse VA an der Querführung 13 wird die Lenkabtriebswelle 17 somit nicht mitverschoben, sondern der Tragschlitten 12 sowie die nachstehend noch näher beschriebenen und von dem Tragschlitten 2 getragenen Elemente werden dabei gleichzeitig auch entlang der Lenkabtriebswelle 17 bewegt. Die Lenkabtriebswelle 17 kann ferner eine Stützfunktion für die Positionierung des Tragschlittens 12 aufweisen, wobei allerdings die Tragfunktion, d.h. die Aufnahme der von der Tragschlitten erzeugten Gewichtskraft, vorzugsweise zumindest weit überwiegend von der Querführung 13 bewirkt wird. Besonders bevorzugt ist es, wenn der Tragschlitten 12 gegenüber der Lenkabtriebswelle 17 lastfrei gelagert ist, insbesondere somit keine auf den Tragschlitten 12 sowie auf die nachstehend noch näher beschriebenen und von dem Tragschlitten 2 getragenen Elemente zurückgehenden Gewichtskraftanteile auf die Lenkabtriebswelle 17 übertragen werden. Die Lenkabtriebswelle 17 kann, insbesondere stirnseitig und weiter insbesondere unmittelbar, mit einem Hydraulikventil 18 verbunden sein, über das beispielsweise ein Lenkhydraulikkreislauf, insbesondere ein Hydraulikaktor einer in den Figuren nicht näher gezeigten Lenkeinrichtung, betätigbar ist, so dass beispielsweise insgesamt ein Lenksystem bereitgestellt wird, dessen vom Bediener über das Lenkrad vorgegebene Lenkvorgaben über die Lenkantriebswelleneinrichtung 16 bis zum Abtrieb der Lenkabtriebswelle 17 ausschließlich mechanisch übertragen werden. Zur Verbindung bzw. mechanischen Bewegungs- bzw. Drehmomentübertragung von der Lenkantriebswelleneinrichtung 16 auf die Lenkabtriebswelle 17 kann ein Richtungswechselgetriebe 19 vorhanden sein, wie es beispielsweise in der DE 10 2010 035 270 B4 offenbart ist. Das Richtungswechselgetriebe 19 kann beispielsweise ein Schraubradgetriebe mit einem Ritzel 20 und einem damit in Eingriff stehendem schrägverzahntem Rad 21 sein, deren Drehachsen um 90° versetzt sind. Das schrägverzahnte Rad 21 kann drehfest auf der Lenkabtriebswelle 17 angeordnet sein, wozu die Lenkabtriebswelle 17 beispielsweise eine Keil- oder Polygonwelle mit einem unrunden Querschnittsprofil sein kann. Die Nabe des schrägverzahnten Rades 21 kann komplementär zum unrunden Querschnittsprofil ausgebildet sein, so dass eine Verschiebung der Rades 21 entlang der Längsachse der Lenkabtriebswelle 17 möglich ist, gleichzeitig hinsichtlich einer Drehung um die Längsachse jedoch ein Formschluss zwischen dem Rad 21 und der Lenkabtriebswelle 17 besteht.

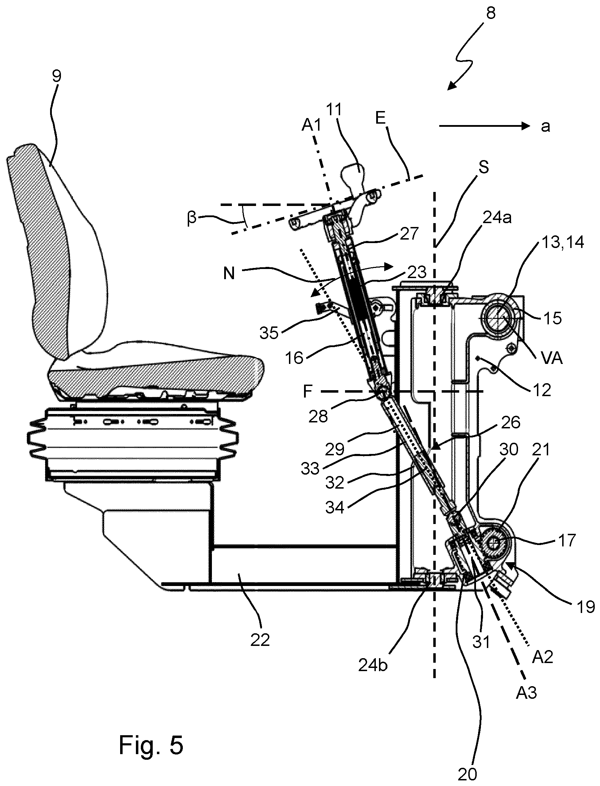

Der Tragschlitten 12 bildet somit auch einen Lagerteil, an den über eine Gelenkeinrichtung 24 eine Bediensitztrageinrichtung 22 um eine Schwenkachse S schwenkbar angelenkt ist. Die Gelenkeinrichtung 24, beispielsweise umfassend ein erstes Drehgelenk 24a und ein zweites Drehgelenk 24b, ist derart ausgebildet, dass die Bediensitztrageinrichtung 22 gegenüber dem Tragschlitten 12 um die, insbesondere in Vertikalrichtung verlaufende, Schwenkachse S drehbar ist, so dass die Bediensitztrageinrichtung 22, an dem der Bediensitz 9 und das Lenkrad 11 angeordnet sind, gegenüber dem Tragschlitten 12, der direkt an der Querführung 13 angeordnet ist, nicht nur verschiebbar, sondern nunmehr auch verschwenkbar ist. Die Gelenkeinrichtung 24 kann dazu mehrere, insbesondere entlang der Schwenkachse S zueinander beabstandete, Einzelgelenke umfassen, wie im vorliegenden Ausführungsbeispiel beispielsweise das obere Drehgelenk 24a und das untere Drehgelenk 24b (Fig. 5), die bezüglich ihrer Drehachsen koaxial auf der Schwenkachse S positioniert sind. Dadurch ist es möglich, den Bediensitz 9 und das Lenkrad 11 gemeinsam nicht nur entlang der Verschiebeachse VA in der Horizontalebene zu verschieben, sondern den Bediensitz 9 zusammen mit dem Lenkrad 11 in beispielsweise der Horizontalebene um die, im vorliegenden Ausführungsbeispiel in Vertikalrichtung verlaufende, Schwenkachse S zu verschwenken.

Die Schwenkachse S und die Verschiebeachse VA verlaufen im vorliegenden Ausführungsbeispiel windschief zueinander und sind beispielsweise in Vorwärtsrichtung a gesehen zueinander beabstandet. Von der konkreten Konstruktion besteht hier grundsätzlich allerdings ein hoher Variationsspielraum, der beispielsweise so weit gehen kann, dass die beiden Achsen in einer in Vertikalrichtung und in Richtung quer zur Verschiebeachse verlaufenden virtuellen Referenzebene einander schneiden bzw. in Vorwärtsrichtung a gesehen auf gleicher Höhe liegen.

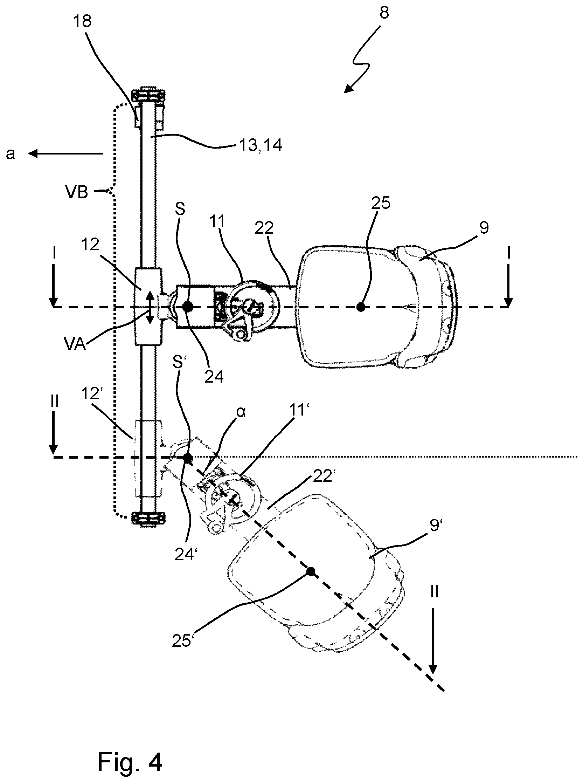

Das mit der erfindungsgemäßen Anordnung erreichbare Funktionsspektrum ist beispielsweise in der Fig. 4 näher veranschaulicht. Mit durchgezogenen Linien ist eine erste Position der Tragschlitten 12 gezeigt, in der diese bezüglich des Verstellbereiches VB entlang der Verschiebeachse VA im Wesentlichen mittig und mit Blickrichtung vom Bediensitz 9 in Vorwärts- bzw. Arbeitsrichtung a dargestellt ist. In gestrichelter Linie ist in der Fig. 4 hierzu eine alternative Position gezeigt, wobei die zueinander korrespondierenden Bezugszeichen in dieser Figur mit "'" gekennzeichnet sind. Der Tragschlitten 12 ist entlang der Verschiebeachse VA innerhalb des Verstellbereiches VB zur Seite verschoben worden (im vorliegenden Beispiel konkret in Vorwärtsrichtung a gesehen nach links). Darüber hinaus ist der die Bediensitztrageinrichtung 22 gegenüber dem Tragschlitten 12 um die Schwenkachse S um den Schwenkwinkel α im Uhrzeigersinn verschwenkt worden, wobei sich der Schwenkwinkel in einer virtuellen, insbesondere horizontalen, Referenzebene bemisst, die senkrecht zur Schwenkachse S verläuft. Es ist möglich, dass der Bediensitz 9 soweit in Verschieberichtung gesehen ausgeschwenkt wird, dass er insbesondere auch mit seinem Sitzindexpunkt 25 über die Querführung 13 und sogar wenigstens teilweise über eine Außenseitenwand der jeweiligen Straßenbaumaschine 1 vorsteht. Bei dem Sitzindexpunkt 25 handelt es sich um einen in der Norm EN ISO 5353 definierten Standard. Die Norm gibt darüber hinaus ein Verfahren an, wie die genaue Lage des Sitzindexpunkts SIP an jedem beliebigen Sitz eindeutig bestimmbar ist, auf das hiermit Bezug genommen wird. Der Sitzindexpunkt SIP liegt ungefähr in der Mitte des Sitzes, ein paar Zentimeter über der Sitzfläche. Genauere Angaben sind der Norm EN ISO 5353 zu entnehmen.

Es versteht sich, dass das vorliegende Ausführungsbeispiel derart ausgebildet ist, dass der Bediensitz 9 auch zur rechten Seite verschiebbar und auch zur rechten Seite hin ausschwenkbar ist. Die Verschiebefunktion des Bediensitzes 9 mit dem Tragschlitten 12 und die Schwenkfunktion der Bediensitztrageinrichtung 22 bzw. des Bediensitzes 9 relativ zum Tragschlitten 12 sind ferner nicht an bestimmte Relativlagen zueinander zwangsgekoppelt, sondern können im Umfang ihrer jeweiligen Verstellbereiche vorzugsweise unabhängig voneinander ausgeführt werden. So ist es beispielsweise vorteilhaft, wenn die Bedieneinrichtung 8 insgesamt derart ausgebildet ist, dass der Bediensitz 9 und das Lenkrad 11 bzw. die Bediensitztrageinrichtung 22 auch aus der in der Fig. 4 mit durchgezogener Linie dargestellten mittig ausgerichteten Position um die Schwenkachse S verschwenkbar sind und verschwenkt werden, ohne dass dazu ein Verschieben des Tragschlittens 12 entlang der Verschiebeachse VA und ein Erreichen einer der beiden Endlagen entlang der Verschiebeachse VA und umgekehrt erforderlich ist.

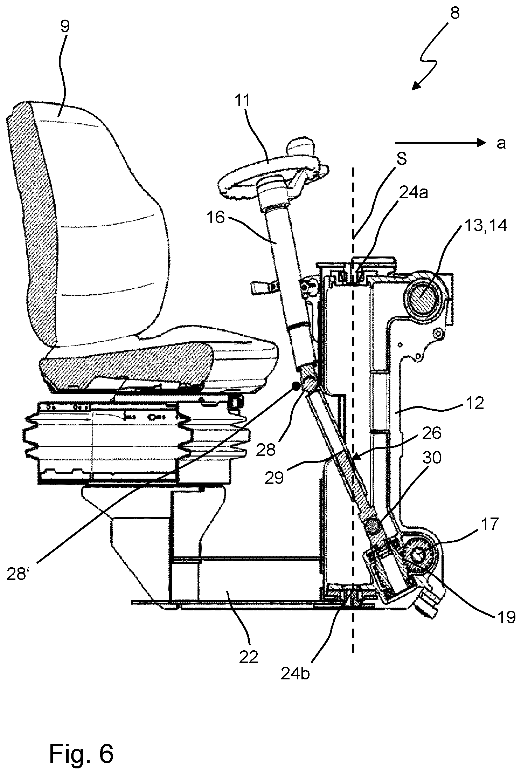

Die Fig. 5 ist eine Querschnittsansicht eines Schnittes entlang der Linie I-I in der Fig. 4 (d.h. bei geradeaus in Vorwärtsrichtung a ausgerichtetem Bediensitz 9 am Tragschlitten 12) und die Fig. 6 eine Querschnittsansicht eines Schnittes entlang der Linie II-II in der Fig. 4 (d.h. bei einem gegenüber dem Tragschlitten 12 ausgeschwenkten Bediensitz 9). Ein Vergleich der Figuren 5 und 6 miteinander verdeutlicht die Wirkweise einer von der Lenkantriebswelleneinrichtung 16 umfassten Längenausgleichseinrichtung 26 sowie weitere Details zu einem möglichen Aufbau der Lenkantriebswelleneinrichtung 16.

Im vorliegenden Ausführungsbeispiel umfasst die Lenkantriebswelleneinrichtung 16 vom Lenkrad 11 kommend eine um eine Lenkwellenachse A1 rotierbare Lenkwelle 27, ein zweites Kardangelenk 28, eine um eine Verbindungswellenachse A2 rotierbare Verbindungswelle 29, ein erstes Kardangelenk 30 und eine um eine Eingangswellenachse A3 rotierbare Eingangswelle 31 des Richtungswechselgetriebes 19. Die Längenausgleichseinrichtung 26 kann, wie im vorliegenden Ausführungsbeispiel gezeigt, als eine Teleskopeinrichtung 32 mit einer Wellenhülse 33 und einer in die Wellenhülse 33 in Umfangsrichtung zur Längsachse formschlüssig und drehfest eingreifende Wellenstange 34 ausgebildet sein. Die Teleskopeinrichtung 26 ist derart ausgebildet, dass ihre Erstreckung in Richtung ihrer Längsachse zumindest innerhalb eines Verstellbereiches, beispielsweise um wenigstens 5 mm, durch ein Verschieben der Wellenhülse 33 relativ zur Wellenstange 34 entlang ihrer gemeinsamen Drehachse (im vorliegenden Ausführungsbeispiel die Drehachse A2) und unter Aufrechterhaltung der Drehfestigkeit zueinander variabel ist. Die Längenausgleichseinrichtung 26 kann beispielsweise in Richtung der Längserstreckung der Lenkantriebswelleneinrichtung gesehen zwischen dem zweiten Kardangelenk 28 und dem ersten Kardangelenk 30 angeordnet. Konkret kann mithilfe der Längenausgleichseinrichtung 26 somit der Abstand der beiden Kardangelenke 28 und 30 unter Aufrechterhaltung der Fähigkeit zur Übertragung eines Drehmomentes durch die Lenkantriebswelleneinrichtung 16 innerhalb eines Ausgleichsbereiches variiert werden. Der Ausgleichsbereich bezeichnet konkret somit beispielsweise die Differenz des maximalen und minimalen Abstandes zwischen den beiden Kardangelenken 28 und 30, die in den verschiedenen Verschwenkpositionen des Bediensitzes gegenüber der Querführung und/oder des Tragteils gegenüber dem Lagerteil auftritt.

In der Fig. 5 ist entlang der Schnittlinie I-I erkennbar, dass die Wellenachsen A1, A2 und A3 nicht koaxial zueinander verlaufen, sondern in der Schnittebene jeweils in einem Winkel zueinander stehen. Diese Winkel sind voneinander abhängig durch eine Verstelleinrichtung 35, mit der der Winkel β eine Lenkradebene E gegenüber einer virtuellen horizontalen Referenzebene bzw. die Neigung N der Lenkwellenachse A1 verstellbar ist, variierbar. Insbesondere kann es vorgesehen sein, dass die Verstelleinrichtung 35 derart ausgebildet ist, dass die Drehachse der Lenkwellenachse A1 bei einer Neigungsverstellung des Lenkrades durch ein Kardangelenk, vorliegend beispielsweise das erste Kardangelenk 28, verläuft. Dem Kardangelenk 28 kommt in diesem Fall somit eine Doppelfunktion zu, da es nicht nur das Gelenk der Lenkantriebswelleneinrichtung 16 für die Neigungsverstellung darstellt, sondern auch an der Anpassung der Lenkantriebswelleneinrichtung 16 an verschiedene Schwenklagen der Bediensitztrageinrichtung 22 um die Schwenkachse S relativ zum Tragschlitten 12 beteiligt ist. Die Lenkradebene E erstreckt sich definitionsgemäß senkrecht zur Drehachse des Lenkrades 11, im vorliegenden Ausführungsbeispiel somit senkrecht zur Lenkwellenachse A1. Konkret ist es somit möglich, mithilfe der Verstelleinrichtung 35 das Lenkrad 11 näher in Richtung zur Querführung 13 heran zu schwenken oder es von der Querführung 13 weg zu schwenken.

Wird die Bediensitztrageinrichtung 22 um die Schwenkachse S verschwenkt, wie es beispielsweise in der Fig. 6 gezeigt ist, verlaufen die Achsen A1, A2 und A3 nicht mehr in einer gemeinsamen vertikalen Ebene, sondern in zueinander verschiedenen, sich untereinander schneidenden vertikalen Ebenen. Ferner ändert sich der Abstand des Lenkrades 11 zum Richtungswechselgetriebe 19, insbesondere der in einer virtuelle horizontale Referenzebene projizierte Abstand zwischen dem Lenkrad 11 und dem Richtungswechselgetriebe 19 bzw. der Lenkabtriebswelle 17. Welche konkreten Punkte vom Lenkrad 11 und vom Richtungswechselgetriebe 19 hier zur Referenzierung der Abstandsänderung konkret herangezogen werden, kann variieren. Beispielsweise kann dies für das Lenkrad 11 ein Punkt auf der Lenkradaußenoberfläche sein, durch den die Lenkwellenachse A1 verläuft, und für das Richtungswechselgetriebe 19 ein Schnittpunkt der Eingangswellenachse A3 mit einer senkrecht zur Lenkabtriebswellenachse LA und zur Eingangswellenachse A3 verlaufenden virtuellen Verbindungsgeraden sein. Diese Abstandsänderung kann unter Aufrechterhaltung der Möglichkeit zur Übertragung des über das Lenkrad 11 vom Bediener erzeugten Lenkdrehmomentes über die Lenkantriebswelleneinrichtung 16 bis zur Lenkabtriebswelle 1 nun mithilfe der in den Kraftübertragungsstrang der Lenkantriebswelleneinrichtung 16 integrierten Längenausgleichseinrichtung 26, im konkreten Beispiel beispielsweise durch ein Verschieben der Wellenhülse 33 relativ zur Wellenstange 34 entlang der Verbindungswellenachse A2, ausgeglichen bzw. kompensiert werden, ohne dass dazu Positionsanpassungen beispielsweise an der Lenkradstellung relativ zum Bediensitz 9 oder des Richtungswechselgetriebes 19 relativ zur Lenkabtriebswelle 17 erforderlich sind.

Um dies näher zu veranschaulichten, ist in der Fig. 6 die Lage des Mittelpunktes des zweiten Kardangelenks 28' aus der Fig. 5 angegeben. Bei einem Verschwenken der Bediensitztrageinrichtung 22 vollziehen somit unter anderem der Bediensitz 9 und das Lenkrad 11 eine Bogenbewegung um die Schwenkachse S in der Horizontalebene. Auch das zweite Kardangelenk 28 verändert seine Relativlage zum Tragschlitten 12. Das erste Kardangelenk 30 ist dagegen radial ortsfest zum Tragschlitten 12 und ändert seine Relativlage nicht. Der Schnittpunkt der Achsen A1 und A2 definiert einen Gelenkpunkt des zweiten Kardangelenks 28 und der Schnittpunkt der Achsen A2 und A3 einen Gelenkpunkt des ersten Kardangelenks 30. Der Vergleich der Figuren 5 und 6 verdeutlicht, dass der Gelenkpunkt des ersten Kardangelenks 30 bei einer Verschwenkung der Bediensitztrageinrichtung 22 um die Schwenkachse S seine Relativlage zum Richtungswechselgetriebe 19, insbesondere beispielsweise dessen Gehäuse, beibehält. Das erste Kardangelenk ist somit derart am Richtungswechselgetriebe 19 gelagert, dass sein Gelenkpunkt ortsfest gegenüber dem Richtungswechselgetriebe 19, insbesondere dessen Gehäuse, ist. Anders verhält es sich dagegen mit dem Gelenkpunkt des zweiten Kardangelenks 28. Dieses ist derart gelagert, dass sich dann, wenn die Bediensitztrageinrichtung 22 um die Schwenkachse S verschwenkt wird, der Gelenkpunkt des zweiten Kardangelenks 28 in einer horizontalen Ebene F bewegt, die im vorliegenden Ausführungsbeispiel senkrecht zur Schwenkachse S verläuft. In dieser Ebene F vollzieht der Gelenkpunkt des zweiten Kardangelenks 28 eine Bewegung entlang einer Kurvenbahn. Der vertikale Abstand der Ebene F relativ zum Richtungswechselgetriebe 19 bzw. entlang der Schwenkachse S und/oder der Verlauf der Kurvenbahn innerhalb der Ebene F kann abhängig von dem Winkel β der Lenkradebene E bzw. der Neigung N der Lenkwellenachse A1 variieren.

Festzuhalten ist zur Fig. 6 rein vorsorglich ferner, dass aus Übersichtlichkeitsgründen in dieser Figur das Lenkrad 11 und der sich vom Lenkrad 11 bis zum zweiten Kardangelenk 28 erstreckende Teil der Lenkantriebswelleneinrichtung 16 nicht geschnitten dargestellt sind.

Fig. 5 verdeutlicht ferner, dass bei einer Projektion in eine horizontale Referenzebene in Vorwärtsrichtung gesehen das erste Kardangelenk 30 vor der Schwenkachse S liegt, die wiederum vor dem zweiten Kardangelenk 28 positioniert ist. Die beiden Kardangelenke 28 und 30 sind somit um die Schwenkachse S verteilt angeordnet. Ferner ist die Lenkabtriebswelle 17 in dieser Betrachtung vor den beiden Kardangelenken 28 und 30 angeordnet. Dadurch gelingt es besonders gut, die Längenausgleichseinrichtung 26 vergleichsweise kompakt auszubilden.

Eine weitere Funktionalität der in den Figuren näher erläuterten Bedieneinrichtung 8, die unabhängig von der vorstehenden Erläuterungen zum konkreten Ausführungsbeispiel ist, ergibt sich schließlich erneut aus der Fig. 5. Demzufolge umfasst die Lenkantriebswelleneinrichtung 16 im Bereich zwischen dem zweiten Kardangelenk 28 und dem Lenkrad 11 eine Teleskopiereinrichtung 23, die derart ausgebildet ist, dass das Lenkrad 11 entlang der Achse A1 verstellbar, mit anderen Worten praktisch höhenverstellbar, ist. Die an dieser Stelle bestehende Längenvariabilität ist allerdings funktional losgelöst von dem vorstehend beschriebenen Längenausgleich beim Verschwenken der Bediensitztrageinrichtung 22 um die Schwenkachse S. Bezogen auf die Lenkantriebswelleneinrichtung 16 ist es aber somit möglich, dass zwei Einrichtungen zur Längenänderung der Lenkantriebswelleneinrichtung 16 vorhanden sind.

## Patentansprüche

1. Straßenbaumaschine (1), insbesondere Straßenfertiger oder Tandemwalze, zur Bearbeitung eines Bodens in einer Vorwärtsrichtung (a), mit
- einem Maschinenrahmen (3),
- einem Fahrstand (2),
- wenigstens einer Fahreinrichtung (6) und
- einer im Fahrstand angeordneten Bedieneinrichtung (8),
die Bedieneinrichtung (8) umfassend
- einen Bediensitz (9) für einen Bediener der Straßenbaumaschine (1) und
- ein Lenkrad (11) zur Eingabe von Lenkeingaben durch den Bediener,
wobei die Bedieneinrichtung mittels eines Tragschlittens (8) entlang einer Querführung (13) verstellbar ist,
wobei der Tragschlitten (12) derart verstellbar an der Querführung (13) gelagert ist, dass er zusammen mit dem Bediensitz (9) und dem Lenkrad (11) entlang der Querführung (13) innerhalb eines Verstellbereiches (VB) zwischen wenigstens zwei zueinander verschiedenen Seitenendlagen verschiebbar ist,
und wobei eine beim Verschieben des Tragschlittens (12) entlang der Querführung (13) mitgeführte Lenkantriebswelleneinrichtung (16) vorhanden ist, die mit einer ortsfest an der Straßenbaumaschine (1) angeordneten und parallel zur Querführung (13) verlaufenden Lenkabtriebswelle (17) gekoppelt ist,
wobei ferner ein Richtungswechselgetriebe (19) vorhanden ist, das die am Lenkrad (11) aufgebrachten Lenkbewegungen von der Lenkantriebswelleneinrichtung (16) auf die Lenkabtriebswelle (17) überträgt, wobei das Richtungswechselgetriebe (19) beim Verschieben des Tragschlittens (12) ebenso mitgeführt wird und hierzu axialverschieblich zur Lenkabtriebswelle (17) angeordnet ist,
und wobei die Lenkantriebswelleneinrichtung (16) das Lenkrad (11) mit dem Richtungswechselgetriebe (19) verbindet,
**dadurch gekennzeichnet,**
**dass** an dem Tragschlitten (12) eine Bediensitztrageinrichtung angeordnet ist, die über eine Gelenkeinrichtung (24) um eine Schwenkachse (S) schwenkbar mit dem Tragschlitten (12) verbunden ist, so dass der Bediensitz (9) und das Lenkrad (11) gegenüber dem Tragschlitten (12) um die Schwenkachse (S) verschwenkbar sind, dass die Lenkantriebswelleneinrichtung (16) eine Längenausgleichseinrichtung (26) umfasst, dass die Lenkantriebswelleneinrichtung (16) ein erstes Kardangelenk (30) und ein zweites Kardangelenk (28) umfasst, die in Reihe zueinander angeordnet sind, und dass bei einer Projektion in eine horizontale Referenzebene das erste Kardangelenk (30) in Vorwärtsrichtung (a) der Straßenbaumaschine (1) gesehen vor der in Vertikalrichtung verlaufenden Schwenkachse (S) und das zweite Kardangelenk (28) in Vorwärtsrichtung (a) gesehen hinter dieser Schwenkachse (S) liegt.

2. Straßenbaumaschine (1) gemäß Anspruch 1,
**dadurch gekennzeichnet,**
**dass** die Längenausgleichseinrichtung (26) eine innerhalb eines Ausgleichsbereiches verstellbare Teleskopeinrichtung (32) aufweist.

3. Straßenbaumaschine (1) gemäß einem der vorhergehenden Ansprüche,
**dadurch gekennzeichnet,**
**dass** die Längenausgleichseinrichtung (26) in Radialrichtung zur Längsachse eines Längenausgleichbereiches der Längenausgleichseinrichtung (26) drehfest ist, wobei die Längenausgleichseinrichtung (26) dazu zwei in Längenausgleichseinrichtung zueinander verstellbare Elemente aufweist, die gleichzeitig in Drehrichtung um die Verstellachse der Längenausgleichseinrichtung (26) drehfest zueinander ausgebildet sind.

4. Straßenbaumaschine (1) gemäß einem der vorhergehenden Ansprüche,
**dadurch gekennzeichnet,**
**dass** die Lenkantriebswelleneinrichtung (16) eine flexible Welle umfasst.

5. Straßenbaumaschine (1) gemäß einem der vorhergehenden Ansprüche,
**dadurch gekennzeichnet,**
**dass** die Längenausgleichseinrichtung (26) zwischen dem ersten und dem zweiten Kardangelenk angeordnet ist.

6. Straßenbaumaschine (1) gemäß einem der einem der vorhergehenden Ansprüche,
**dadurch gekennzeichnet,**
**dass** bei einer Projektion der Lenkantriebswelleneinrichtung (16) in eine horizontale Referenzebene die Lenkabtriebswelle (17) und/oder eine Führungsschiene (14) und/oder das Richtungswechselgetriebe (19) in einer Vorwärtsrichtung (a) der Straßenbaumaschine (1) gesehen vor dem ersten und dem zweiten Kardangelenk positioniert sind.

7. Straßenbaumaschine (1) gemäß einem der einem der vorhergehenden Ansprüche,
**dadurch gekennzeichnet,**
**dass** das Richtungswechselgetriebe (19) eine um eine Eingangswellensachse rotierbare Eingangswelle umfasst, dessen Antriebsende mit dem erste Kardangelenk (30) verbunden ist, dass das erste und das zweite Kardangelenk mit einer um eine Verbindungswellenachse rotierbaren Verbindungswelle miteinander verbunden sind, und dass das Lenkrad (11) mit dem zweiten Kardangelenk (28) über eine um eine Lenkwellenachse rotierbare Lenkwelle miteinander verbunden sind.

8. Straßenbaumaschine (1) gemäß einem der vorhergehenden Ansprüche,
**dadurch gekennzeichnet,**
**dass** die Bediensitztrageinrichtung eine Verstelleinrichtung (35) umfasst, die derart ausgebildet ist, dass die Neigung des Lenkrades verstellbar ist.

9. Straßenbaumaschine (1) gemäß den Ansprüchen 7 und 8,
**dadurch gekennzeichnet,**
**dass** die Verstelleinrichtung (35) und die Lenkantriebswelleneinrichtung (16) derart ausgebildet sind, dass die Lenkwelle bezüglich ihrer Rotationsachse koaxial zur Rotationsachse der Eingangswelle positionierbar ist.

10. Straßenbaumaschine (1) gemäß einem der vorhergehenden Ansprüche,
**dadurch gekennzeichnet,**
**dass** der Verstellwinkel der Bediensitztrageinrichtung gegenüber dem Tragschlitten (12) um die Schwenkachse (S) zwischen zwei maximalen Endlagen wenigstens 90°, insbesondere wenigstens 120°, und/oder maximal 180°, insbesondere maximal 160°, beträgt.

## Claims

1. A road construction machine (1), in particular a road paver or tandem roller, for working a ground in a forward direction (a), comprising:
- a machine frame (3),
- an operator platform (2),
- at least one travel unit (6), and
- an operating device (8) arranged on the operator platform,
the operating device (8) comprising:
- an operator seat (9) for an operator of the road construction machine (1), and
- a steering wheel (11) for the operator to enter steering inputs,
wherein the operating device is adjustable along a transverse guide (13) using a support slide (12), wherein it is adjustably mounted on the transverse guide (13) such that it can be displaced together with the operator seat (9) and the steering wheel (11) along the transverse guide (13) within an adjustment range (VB) between at least two different lateral end positions,
and wherein a steering input shaft device (16) is provided, which is carried along the transverse guide (13) when the support slide (8) is displaced and which is coupled to a steering output shaft (17) which is arranged stationary on the road construction machine (1) and extends parallel to the transverse guide (13),
wherein further a direction change transmission (19) is provided, which transmits the steering movements applied to the steering wheel (11) from the steering input shaft device (16) to the steering output shaft (17), wherein the direction change transmission (19) is also carried along when the support slide (12) is displaced, and is axially displaceable relative to the steering output shaft (17),
and wherein the steering input shaft device (16) connects the steering wheel (11) to the direction change transmission (19),
**characterized in**
**that** an operator seat support device is arranged on the support slide (12), which is connected to the support slide (12) such that it can swivel about a swivel axis (S) via a joint device (24), so that the operator seat (9) and the steering wheel (11) are configured to swivel relative to the support slide (12) about the swivel axis (S), that the steering input shaft device (16) comprises a length compensation device (26), that the steering input shaft device (16) comprises a first universal joint (30) and a second universal joint (28), which are arranged in series with one another, and that when projected into a horizontal reference plane, the first universal joint (30) is located in front of the swivel axis (S) when viewed in the forward direction (a) of the road construction machine (1), the swivel axis (S) running vertically, and the second universal joint (28) is located behind the swivel axis (S) when viewed in the forward direction (a).

2. The road construction machine (1) according to claim 1,
**characterized in**
**that** the length compensation device (26) has a telescopic device (32) which is configured to be adjusted within a compensation range.

3. The road construction machine (1) according to any of the preceding claims,
**characterized in**
**that** the length compensation device (26) is configured to co-rotate in the radial direction relative to the longitudinal axis of a length compensation region of the length compensation device (26), wherein the length compensation device (26) comprises two elements that can be adjusted relative to each other in the length compensation direction and are at the same time configured to co-rotate with each other in the direction of rotation about the adjustment axis of the length compensation device (26).

4. The road construction machine (1) according to any of the preceding claims,
**characterized in**
**that** the steering input shaft device 16) comprises a flexible shaft.

5. The road construction machine (1) according to any of the preceding claims,
**characterized in**
**that** the length compensation device (26) is arranged between the first and the second universal joint.

6. The road construction machine (1) according to any of the preceding claims,
**characterized in**
**that** when the steering input shaft device (16) is projected into a horizontal reference plane, the steering output shaft (17) and/or the guide rail (14) and/or the direction change transmission (19) are positioned in front of the first and the second universal joint as viewed in a forward direction (a) of the road construction machine (1).

7. The road construction machine (1) according to any of the preceding claims,
**characterized in**
**that** the direction change transmission (19) comprises an input shaft rotatable about an input shaft axis, the input end of which is connected to the first universal joint (30), in that the first and second universal joints are connected to one another by a connecting shaft rotatable about a connecting shaft axis, and in that the steering wheel (11) is connected to the second universal joint (28) via a steering shaft rotatable about a steering shaft axis.

8. The road construction machine (1) according to any of the preceding claims,
**characterized in**
**that** the operator seat support device comprises an adjustment device (35) configured such that the inclination of the steering wheel can be adjusted.

9. The road construction machine (1) according to claims 7 and 8,
**characterized in**
**that** the adjustment device (35) and the steering input shaft device (16) are configured such that the steering shaft can be positioned coaxially with respect to its axis of rotation relative to the axis of rotation of the input shaft.

10. The road construction machine (1) according to any of the preceding claims,
**characterized in**
**that** the angle of adjustment of the operator seat support device relative to the support slide (12) about the swivel axis (S) between two maximum end positions is at least 90°, in particular at least 120°, and/or a maximum of 180°, in particular a maximum of 160°.

## Revendications

1. Engin de construction routière (1), en particulier finisseur ou compacteur tandem, destiné à travailler un sol dans un sens de marche avant (a), comprenant
- un châssis (3),
- un poste de conduite (2),
- au moins un dispositif de déplacement (6) et
- un dispositif de commande (8) disposé dans le poste de conduite,
le dispositif de commande (8) comprenant
- un siège de commande (9) pour un opérateur de l'engin de construction routière (1) et
- un volant (11) de saisie des instructions de direction par l'opérateur, dans lequel
le dispositif de commande est réglable au moyen d'un chariot de support (8) le long d'un guide transversal (13),
le chariot de support (12) est monté de manière réglable sur le guide transversal (13) de telle sorte qu'il puisse être déplacé avec le siège de commande (9) et le volant (11) le long du guide transversal (13) dans une plage de réglage (VB) entre au moins deux positions de fin de course latérales différentes l'une de l'autre,
et il est prévu un dispositif formant arbre de direction menant (16) qui est déplacé lors du déplacement du chariot de support (12) le long du guide transversal (13) et qui est couplé à un arbre de direction mené (17) disposé de manière fixe sur l'engin de construction routière (1) et s'étendant parallèlement au guide transversal (13),
il est prévu en outre un mécanisme de changement de sens (19) qui transmet les mouvements de direction, effectués au niveau du volant (11), du dispositif formant d'arbre de direction menant (16) à l'arbre de direction mené (17), le mécanisme de changement de sens (19) étant également déplacé lors du déplacement du chariot de support (12) et étant disposé à cet effet de manière à pouvoir se déplacer axialement par rapport à l'arbre de direction mené (17),
et le dispositif formant d'arbre de direction menant (16) relie le volant (11) au mécanisme de changement de sens (19),
**caractérisé en ce que**
un dispositif porteur de siège de commande est disposé sur le chariot de support (12), lequel est relié au chariot de support (12) de manière à pouvoir pivoter autour d'un axe de pivotement (S) via un dispositif d'articulation (24), de sorte que le siège de commande (9) et le volant (11) peuvent pivoter par rapport au chariot de support (12) autour de l'axe de pivotement (S),
**en ce que** le dispositif formant arbre de direction menant (16) comprend un dispositif de compensation de longueur (26),
**en ce que** le dispositif formant arbre de direction menant (16) comprend un premier joint de Cardan (30) et un deuxième joint de Cardan (28) qui sont disposés en série l'un par rapport à l'autre, et
**en ce que**, dans une projection dans un plan de référence horizontal, le premier joint de Cardan (30) se trouve, vu dans le sens de marche avant (a) de l'engin de construction routière (1), devant l'axe de pivotement (S) s'étendant dans le sens vertical, et le deuxième joint de Cardan (28) se trouve, vu dans le sens de marche avant (a), derrière ledit axe de pivotement (S).

2. Engin de construction routière (1) selon la revendication 1,
**caractérisé en ce que**
le dispositif de compensation de longueur (26) comprend un dispositif télescopique (32) réglable au sein d'une plage de compensation.

3. Engin de construction routière (1) selon l'une des revendications précédentes,
**caractérisé en ce que**
le dispositif de compensation de longueur (26) est solidaire en rotation dans le sens radial par rapport à l'axe longitudinal d'une zone de compensation de longueur du dispositif de compensation de longueur (26), le dispositif de compensation de longueur (26) comportant à cet effet deux éléments réglables l'un par rapport à l'autre dans le sens de la compensation de longueur, qui sont simultanément solidaires en rotation l'un par rapport à l'autre dans le sens de rotation autour de l'axe de réglage du dispositif de compensation de longueur (26).

4. Engin de construction routière (1) selon l'une des revendications précédentes,
**caractérisé en ce que**
le dispositif formant arbre de direction menant (16) comprend un arbre flexible.

5. Engin de construction routière (1) selon l'une des revendications précédentes,
**caractérisé en ce que**
le dispositif de compensation de longueur (26) est disposé entre le premier et le deuxième joint de Cardan.

6. Engin de construction routière (1) selon l'une des revendications précédentes,
**caractérisé en ce que**,
dans une projection du dispositif formant arbre de direction menant (16) dans un plan de référence horizontal, l'arbre de direction mené (17) et/ou un rail de guidage (14) et/ou le mécanisme de changement de sens (19) sont positionnés, vus dans un sens de marche avant (a) de l'engin de construction routière (1), devant les premier et deuxième joints de Cardan.

7. Engin de construction routière (1) selon l'une des revendications précédentes,
**caractérisé en ce que**
le mécanisme de changement de sens (19) comprend un arbre d'entrée pouvant tourner autour d'un axe d'arbre d'entrée, dont l'extrémité d'entraînement est reliée au premier joint de Cardan (30),
**en ce que** les premier et deuxième joints de Cardan sont reliés entre eux par un arbre de liaison pouvant tourner autour d'un axe d'arbre de liaison, et **en ce que** le volant (11) est relié au deuxième joint de Cardan (28) par un arbre de direction pouvant tourner autour d'un axe d'arbre de direction.

8. Engin de construction routière (1) selon l'une des revendications précédentes,
**caractérisé en ce que**
le dispositif porteur de siège de commande comprend un dispositif de réglage (35) qui est conçu de manière à permettre de régler l'inclinaison du volant.

9. Engin de construction routière (1) selon les revendications 7 et 8,
**caractérisé en ce que**
le dispositif de réglage (35) et le dispositif formant d'arbre de direction menant (16) sont conçus de telle sorte que l'axe de rotation de l'arbre de direction peut être positionné coaxialement par rapport à l'axe de rotation de l'arbre d'entrée.

10. Engin de construction routière (1) selon l'une des revendications précédentes,
**caractérisé en ce que**
l'angle de réglage du dispositif porteur de siège de commande par rapport au chariot de support (12) autour de l'axe de pivotement (S) entre deux positions de fin de course maximale est de 90° au minimum, en particulier de 120° au minimum, et/ou de 180° au maximum, en particulier de 160° au maximum.
